# EUROPÄISCHE PATENTSCHRIFT

(11) **EP 3 525 970 B1**
(45) Veröffentlichungstag und Bekanntmachung des Hinweises auf die Patenterteilung: **01.07.2026**
(21) Anmeldenummer: 17791602.0
(22) Anmeldetag: 11.10.2017
(51) Int. Cl.: B23C 5/20, B22F 3/03, B22F 5/10, B28B 3/08, B30B 11/00, B30B 15/02, B30B 15/30, B22F 5/00

(54) **VERFAHREN UND VORRICHTUNG ZUR HERSTELLUNG EINES HARTMETALLPRESSLINGS SOWIE HARTMETALLPRESSLING**
METHOD AND DEVICE FOR PRODUCING A HARD-METAL PRESSED ARTICLE, AND HARD-METAL PRESSED ARTICLE
PROCÉDÉ ET DISPOSITIF DE FABRICATION D'UN COMPRIMÉ DE MÉTAL DUR ET COMPRIMÉ DE MÉTAL DUR

(30) Priorität: 12.10.2016 DE 102016119429
(43) Veröffentlichungstag der Anmeldung: 21.08.2019
(73) Patentinhaber: Horn Hartstoffe GmbH, 72072 Tübingen (DE)
(72) Erfinder: FEISTRITZER, Stefan, 72810 Gomaringen (DE); HERMES, Dieter, 72108 Rottenburg (DE)
(74) Vertreter: Witte, Weller & Partner Patentanwälte mbB
(86) Internationale Anmeldenummer: PCT/EP2017/075948
(87) Internationale Veröffentlichungsnummer: WO 2018/069397

(56) Entgegenhaltungen:
- EP-A1- 2 808 106
- WO-A1-2015/120496
- US-A1- 2006 165 828
- US-A1- 2009 136 776

## Beschreibung

Die vorliegende Offenbarung betrifft ein Verfahren und eine Vorrichtung zur Herstellung eines Hartmetallpresslings sowie einen Hartmetallpressling. Die vorliegende Offenbarung befasst sich ferner mit der Herstellung von Rohlingen für das Sintern von Bauteilen aus Hartmetallen, insbesondere von Schneidwerkzeugen. Schneidwerkzeuge können etwa Schneideinsätze, Wendeschneidplatten und Ähnliches umfassen.
Aus der US 2006/165828 A1 ist ein Verfahren zur Herstellung eines Grünlings für einen Schneideinsatz bekannt, mit den Schritten: (i) Bereitstellen eines Werkzeugsatzes für den Grünling, der eine obere und eine untere Matrize und damit gekoppelte Ober- und Unterstempel umfasst, wobei die Stempel in Bezug auf ihre zugeordneten Matrizen verschiebbar sind; wobei jede Matrize eine Innenfläche aufweist, die einen Stanztunnel bildet; (ii) Schließen des Werkzeugsatzes, wobei die Innenflächen der oberen und unteren Matrize einen Matrizenhohlraum bilden, wobei der untere Stempel in der unteren Matrize angeordnet ist und der obere Stempel außerhalb der oberen Matrize liegt; (iii) Füllen des Matrizenhohl-raums mit einer vorbestimmten Menge sinterfähigen Pulvers; (iv) Bewegen des oberen Stempels in die oberen Matrize; (v) Verdichten des sinterfähigen Pulvers, umfassend eine Relativbewegung der Stempel in den Matrizen, zur Formung des Grünlings; und (vi) Bewegen der oberen Matrize und des Stempels weg von der unteren Matrize und dem Stempel in eine offene Position, zum Entformen des Grünlings.

Schneidwerkzeuge aus Hartmetallen werden allgemein bei hohen Temperaturen gesintert. Zur Herstellung formgenauer Zwischenprodukte, die auch als Presslinge, Rohlinge oder Grünlinge bezeichnet werden, sind zwei wesentliche Verfahren bekannt. Ein Verfahren betrifft die urformende Herstellung mittels Spritzguss. Ein anderer Ansatz betrifft die Herstellung von Presslingen mittels Pressen. Die vorliegende Offenbarung befasst sich primär mit dem Pressen von Hartmetallpulver bei hohen Drücken zur Herstellung von Presslingen für die pulvermetallurgische Herstellung von Schneidwerkzeugen oder Ähnlichem.

Aus der WO 2013/024473 A1 ist ein Werkzeug zur Herstellung eines Hartmetallpresslings bekannt, wobei das Werkzeug eine Mittelachse, die eine Axial- und eine Radialrichtung definiert, einen Basiskörper mit einem Durchgangsloch, radial ausgerichteten Stempelkanälen und radial ausgerichteten Matrizenkanälen, einen Oberstempel und einen gegenüberliegenden Unterstempel, mehrere Seitenstempel, die paarweise angeordnet und in den Stempelkanälen radial beweglich sind, und mehrere Matrizenstäbe aufweist, die in den Matrizenkanälen radial beweglich sind, wobei jeder Matrizenstab zwei benachbarten Seitenstempeln zugeordnet ist, wobei jeder Matrizenstab eine vordere Matrizenformgebungsfläche, die durch eine Matrizenstab-Umfangskante begrenzt ist, und zwei Matrizenführungsflächen aufweist, die davon nach hinten divergieren, und wobei die beiden benachbarten Seitenstempel auf den Matrizenführungsflächen des gemeinsamen Matrizenstabs gleitfähig beweglich sind.

Mit diesem Werkzeug können grundsätzlich komplexe Konturen geformt werden, die sich für Schneidwerkzeuge eignen. Ein derartiges Werkzeug ist jedoch komplex aufgebaut und nur mit hohem Steuerungsaufwand zu betreiben. Insbesondere die parallele Ansteuerung der Hauptstempel (Oberstempel und Unterstempel) sowie der Nebenstempel (Seitenstempel) ist mit hohem Aufwand verbunden.

Ein Nachteil dieses Werkzeugkonzepts besteht darin, dass es mit dem beschriebenen Werkzeugaufbau zum Beispiel nicht möglich ist, die im Rahmen dieser Offenbarung zu Beispielzwecken genannte Schneidplatte presstechnisch herzustellen, ohne dass Schneidkanten erzeugt werden, die nicht durch Formteilungen oder Grate beeinträchtigt, insbesondere gekreuzt, werden. Dasselbe gilt für ähnliche gestaltete Presslinge.

Ähnliche Werkzeugkonzepte sind aus der DE 10 2013 204 370 A1, der DE 10 2010 048 183 A1, und der WO 2015/120496 A1 bekannt. Es wird darin jeweils auf Werkzeuge abgestellt, bei denen die Hauptstempelachsen durch einen Oberstempel und einen Unterstempel gebildet werden. Sofern überhaupt seitliche Stempel vorgesehen sind, bilden diese keine Hauptstempel, sondern nur Hilfsstempel. Die auf diese Weise erzeugten Hartmetallpresslinge weisen einen bestimmten Gefügeverlauf auf, der durch die Hauptpressrichtung bestimmt ist.

Ein Beispiel für einen Schneideinsatz ist eine sog. Wendeschneidplatte. Eine solche Wendeschneidplatte ist in der DE 10 2012 108 752 B aus dem Hause der Anmelderin beschrieben. Der Vorteil dieser Wendeschneidplatte ist das Vorhandensein von vier Schneiden, wobei der Schneideinsatz aus zwei im Wesentlichen identischen, um 180° zueinander versetzten Teilkörpern besteht, die jeweils zwei Schneiden ausbilden. Mit anderen Worten kann der Schneideinsatz um 180° um eine Zentralachse gedreht werden, wodurch zwei Schneiden nutzbar sind. Ferner kann der Schneideinsatz insgesamt um eine senkrecht zur Zentralachse stehende Achse um 180° gedreht werden, wodurch (nach entsprechender Ausrichtung der Drehorientierung bezüglich der Zentralachse) zwei weitere Schneiden nutzbar sind.

Rohlinge für derartige Teile werden regelmäßig mittels Spritzguss hergestellt und in nicht unerheblichem Umfang nachbearbeitet.

Schneideinsätze der vorgenannten Art, welche im Speziellen auch als Tangentialschneideinsätze bezeichnet werden, kommen meist bei Anwendungen zur Metallbearbeitung, insbesondere bei Fräs- oder Drehanwendungen, zum Einsatz. Hauptsächlich werden die vorliegenden Schneideinsätze zum sogenannten Planfräsen bzw. Eckfräsen eingesetzt. Fräswerkzeuge, bei denen derartige Schneideinsätze zum Einsatz kommen, umfassen typischerweise einen rotationssymmetrischen Werkzeughalter, an dem umfangsseitig zumindest eine, meist jedoch eine Vielzahl dieser Schneidsätze lösbar befestigt sind.

Das Abtragen von Material am Werkstück während des Fräsvorgangs wird durch hochpräzise Schneiden bzw. Schneidkanten, welche in die Schneideinsätze eingeformt sind, gewährleistet. Um den Verschleiß möglichst gering zu halten, den sehr hohen bei der Verarbeitung auftretenden Schnittkräften standzuhalten und eine möglichst hohe Präzision zu gewährleisten, werden diese Schneideinsätze zumeist aus Hartmetall hergestellt. Durch die hohe Materialbeanspruchung verschleißen die Schneidkanten dennoch im Laufe der Zeit. Insbesondere bei Fräsbearbeitungen, die eine hohe Präzision voraussetzen, müssen die Schneideinsätze daher nach einer gewissen Zeit ausgetauscht werden.

Um zu verhindern, dass die relativ teuren Schneideinsätze jedes Mal in ihrer Gesamtheit ausgetauscht werden müssen, wenn die Schneiden verschlissen sind, wurden mehrseitige Schneideinsätze entwickelt, welche mehrere symmetrisch zueinander angeordnete Schneiden aufweisen.

Ferner wird bei der Gestaltung von Matrizen für die pulvermetallurgische Herstellung von Hartmetallpresslingen darauf geachtet, keine Formteilung vorzusehen, die über die Schneidkanten bzw. quer dazu verläuft. Gleichwohl liegen die Schneidkanten vorzugsweise in einer Trennebene. Dies kann dazu führen, dass Rohlinge bestimmter Schneidwerkzeuge nicht nachbearbeitungsfrei oder nachbearbeitungsarm mittels Pressen erzeugbar sind.

Eine weitere Herausforderung bei der Auslegung von Presswerkzeugen zur Herstellung von Presslingen für Hartmetallwerkzeuge betrifft das Entformen von schrägen, spitzen Fasen bzw. tangentialen Übergängen, die in die Trennebene münden. Dies führt häufig dazu, dass Teile der Matrize bzw. Teile der Presse, die die Gestalt des Presslings abbilden, zumindest abschnittsweise sehr dünnwandig oder spitz ausgeführt sein müssen. Dies erhöht den Verschleiß und die Bruchgefahr und wird somit vorzugsweise vermieden.

Das Pressen von Hartmetallpresslingen erfolgt bei sehr hohen Drücken, die Bereiche von etwa 2000 bis etwa 4000 bar (0,2 bis 0,4 GPa) erreichen können. Das Pressen von Hartmetallpulvern kann nicht ohne weiteres mit dem Pressen von Metallpulver oder von anderen pulverförmigen Werkstoffen verglichen oder gar gleichgesetzt werden. Ein Grund hierfür ist das sogenannte Auffederverhalten von gepressten Hartmetallpresslingen. Diese bestehen im Gegensatz zu Presslingen auf Basis von Metallpulver zu einem nicht unerheblichen Teil aus Plastifikatoren (z.B. Paraffinen, Wachsen) und sind porös, weisen also Lufteinschlüsse bzw. Hohlräume auf. Das Auffederverhalten kann sich beispielhaft in einer Volumenzunahme nach dem Pressen niederschlagen, die etwa 3% des Ausgangsvolumens betragen kann.

Pressvorrichtungen für das Hartmetallpressen weisen üblicherweise neben den Hauptstempeln, die der Hauptpressachse zugeordnet sind, keine weiteren Stempel auf. Wie vorstehend bereits beschrieben, handelt es sich bei den Hauptstempeln üblicherweise um einen Oberstempel und einen Unterstempel, die vertikal verfahrbar sind und insbesondere aufeinander zu bewegt werden können, um den Pressling zu erzeugen.

Auf dem Gebiet der Hartmetall-Pulvermetallurgie können diese Hauptstempel nicht einfach durch weitere (seitliche) Stempel ergänzt werden, die etwa ähnlich seitlichen Schiebern beim Spritzguss gestaltet sind, aber als Stempel fungieren. Dies ist zum einen durch die hohen Drücke beim Pressvorgang bedingt. Auch hätten derartige (seitliche) Stempel einen negativen Einfluss auf die Pressdichteverteilung des Presslings. Die Pressdichteverteilung wird im Rahmen dieser Offenbarung auch als Pressgefügeverteilung bezeichnet

Die obige Einschränkung schließt nicht aus, dass zuweilen Nebenstempel oder Hilfsstempel genutzt werden, die entlang einer Ebene verfahren werden, die gegenüber der Vertikalen geneigt ist. Derartige Hilfsstempel werden jedoch üblicherweise nur dazu genutzt, nachrangige Konturen, wie etwa Durchbrüche, seitliche Mulden oder Ähnliches, zu erzeugen. Die Wirkfläche, mit der ein derartiger Hilfsstempel auf den Pressling einwirkt, ist üblicherweise deutlich kleiner als die Fläche der jeweiligen Seite der Matrizenwandung, die den Pressling umschließt.

Um eine möglichst günstige Bauteilstruktur, insbesondere ein hinreichend homogene Pressdichte, zu erzeugen, wird üblicherweise angestrebt, die Hauptstempel derart zu bemessen, dass diese, in vertikaler Richtung betrachtet, die Silhouette bzw. den Umriss des Presslings möglichst vollständig abdecken. Wäre dies nicht der Fall, wäre also ein Hauptstempel deutlich kleiner als die Silhouette des Presslings, würde es zu ungünstigen Spannungsverläufen bzw. Druckverläufen beim Pressen kommen, da nicht der gesamte Querschnitt des Presslings unmittelbar dem (vorrangig) durch die Hauptstempel erzeugten Pressdruck ausgesetzt wäre.

Abgesehen von den Stempeln weist eine Matrize zum Pressen von Rohlingen für die Herstellung von Hartmetallschneidwerkzeugen üblicherweise weitere Formteile auf, die jedoch nicht aktiv (als angetriebener Stempel) am Pressvorgang beteiligt sind. Derartige Formteile können grundsätzlich beweglich sein und werden dann etwa als Schieber bezeichnet. Es sind jedoch auch feste Formteile denkbar. Allgemein werden die Formteile während des Pressvorgangs selbst nicht bewegt. Bewegliche Formteile, etwa Schieber oder dergleichen, werden für den Entformvorgang bewegt, um den Pressling auszuformen.

Vor diesem Hintergrund liegt der vorliegenden Offenbarung die Aufgabe zugrunde, ein Verfahren und eine Vorrichtung zur endkonturnahen Herstellung von Hartmetallpresslingen, insbesondere zur Herstellung von Sinterrohlingen für Schneidwerkzeuge, anzugeben, die eine hohe Gestaltungsfreiheit betreffend die Werkzeuggeometrie sowie eine Herstellung mit einem günstigen Pressgefügeverlauf bzw. mit einem günstigen Pressdichteverlauf erlauben. Insbesondere soll die Herstellung von Hartmetallpresslingen mit multiplen symmetrischen Gestaltungen vereinfacht werden. Dies kann Presslinge betreffen, deren Schneiden bezüglich einer Achse, etwa einer Zentralachse drehsymmetrisch gestaltet sind, wobei ferner eine drehsymmetrische Gestaltung bezüglich einer Mittelebene vorgesehen ist. Auf diese Weise kann das sich ergebene Schneidwerkzeug um zwei Raumachsen gedreht werden, so dass jeweils eine von vier Schneiden in Position gebracht werden kann.

Dies betrifft insbesondere auch Presslinge für Schneidwerkzeuge, die Schneidkanten aufweisen, die gegensinnig orientiert und voneinander abgewandt sind. Ferner soll möglichst eine Herstellung von Hartmetallpresslingen für Schneidwerkzeuge beschrieben werden, die die Erzeugung von Schneidkanten erlaubt, die nicht durch Formteilungen oder Grate beeinträchtigt, insbesondere gekreuzt, werden. Schließlich soll ein Verfahren und eine Vorrichtung angegeben werden, die die Nutzung besonders robust gestalteter Stempel und vorzugsweise auch Formteile gestattet, die insbesondere keine übermäßig dünnen und spitzen Gestaltabschnitte umfassen.

Das Verfahren betreffend wird die Aufgabe durch ein Verfahren zur endkonturnahen Herstellung von Hartmetallpresslingen, insbesondere zur Herstellung von Sinterrohlingen für Schneidwerkzeuge gelöst, das die folgenden Schritte umfasst:
- Bereitstellung einer mehrteiligen Matrize, die an einem Bett aufgenommen ist und die eine Mehrzahl seitlicher Formteile umfasst, die Seitenflächen einer Kavität für einen Pressling definieren,
   wobei zumindest ein seitliches Formteil ferner einen Abschnitt einer Oberseite der Kavität definiert,
- Zuführen der seitlichen Formteile, umfassend eine Bewegung der seitlichen Formteile parallel zu einer ersten Ebene, die eine Horizontalebene ist,
- Zuführen zumindest zweier seitlicher Stempelteile, umfassend eine Bewegung der Stempelteile parallel zu der ersten Ebene, die eine Horizontalebene ist,
   wobei zumindest zwei seitliche Formteile mit einer Führungsausnehmung für ein seitliches Stempelteil versehen sind, das entlang der Führungsausnehmung verfahrbar ist,
- Zuführen einer Fülleinheit über eine Öffnung der Kavität und Befüllen der Kavität mit einem Hartmetallpulver,
- Zuführen zumindest eines Formoberteils, das einen Abschnitt der Oberseite der Kavität definiert, umfassend eine Bewegung des Formoberteils parallel zu **einer** zweiten Ebene, die eine Vertikalebene ist,
- Festhalten der seitlichen Formteile und des Formoberteils,
- Verdichten des Pulvers mit den zumindest zwei seitlichen Stempelteilen, und
- Öffnen der seitlichen Formteile, des Formoberteils und der Stempelteile zum Entformen des Presslings,
   wobei die Kavität über die Oberseite mit dem Hartmetallpulver Schwerkraft-unterstützt befüllt wird.

Die Aufgabe der Erfindung wird auf diese Weise vollständig gelöst.

Das Verfahren erlaubt die Herstellung von Presslingen, die bislang nur mit hohem Nachbearbeitungsaufwand herstellbar waren. Ferner kann das Verfahren zumindest teilweise die Herstellung von Sinterrohlingen für Schneidwerkzeuge mittels Spritzguss ersetzen oder zumindest ergänzen. Die Anordnung der seitlichen Formteile sowie der seitlichen Stempelteile erlaubt eine höhere Gestaltungsfreiheit. Insbesondere lassen sich Werkstücke pressen und entformen, die gemäß konventionellen Verfahren nicht ohne weiteres durch Pressen herstellbar waren.

Die verfahrensgemäße Herstellung hat den Vorteil, dass die genutzten Formteile und Stempelteile robust und ohne übermäßige Wandstärkenreduktion ausgeführt werden können. Ferner erlaubt das Verfahren durch die Anordnung der Formteile und der Stempelteile einen günstigen Gefügeverlauf bzw. Druckverlauf beim Pressen. Die auf diese Weise erzeugten Presslinge weisen eine hohe Homogenität auf.

Im Rahmen des Herstellungsverfahrens lassen sich Presslinge für Bauteile erzeugen, deren sinterroh gefertigte Schneidkanten im Hinblick auf Standzeit und Verschleißverhalten geschliffenen Schneidkanten überlegen sind. Die Schneidkanten können direkt beim Pressen endkonturnah oder sogar endkonturgetreu erzeugt werden, ohne dass es einer umfangreichen Nachbearbeitung mittels Schleifen bedarf.

Vorzugsweise gibt das Formoberteil die Öffnung der Kavität zum Befüllen der Kavität mit dem Hartmetallpulver frei, wenn das Formoberteil von der Kavität entfernt ist.

In einer beispielhaften Ausgestaltung bildet das zumindest eine seitliche Formteil einen Abschnitt der Oberseite der Kavität. Das Formoberteil bildet einen weiteren (anderen) Abschnitt der Oberseite der Kavität. In einer weiteren beispielhaften Ausgestaltung bildet dasselbe Formteil oder ein anderes Formteil einen Abschnitt der Unterseite der Kavität. Bei Verwendung eines Formunterteils bildet dieses einen weiteren (anderen) Abschnitt der Unterseite der Kavität.

Vorzugsweise eignet sich das Verfahren zur Herstellung von Presslingen, auf deren Basis Schneidwerkzeuge oder Schneideinsätze hergestellt werden, die im Wesentlichen symmetrische (aber zueinander verdrehte) Oberseiten und Unterseiten aufweisen, zwischen denen sich ein Umfangsbereich erstreckt, in dem Spanflächen oder Spanmulden von Schneiden ausgebildet sind. Freiflächen der Schneiden sind dabei vorzugsweise der Oberseite bzw. der Unterseite zugeordnet. Die Schneiden sind zum Teil der Oberseite und zum Teil der Unterseite zugeordnet.

Das Festhalten der Formteile kann kraftgesteuert und/oder weggesteuert erfolgen. Ziel des Festhaltens ist eine Lagesicherung. Demgemäß kann das Festhalten etwa mittels Formschluss, Kraftschluss oder in entsprechender Kombination erfolgen. Das Festhalten kann auch als Arretieren oder Fixieren bezeichnet werden, und zwar auch dann, wenn die Lagesicherung im Wesentlichen durch das Aufbringen einer entsprechend hohen Haltekraft erfolgt.

Es ist bevorzugt, wenn neben den seitlichen Stempelteilen keine weiteren, insbesondere keine vertikalen Stempelteile vorgesehen sind. Hauptstempel sind die seitlichen Stempelteile. Gemäß beispielhaften Ausführungsformen werden ausschließlich seitlichen Stempelteile verwendet. Mit anderen Worten stellt das Herstellungsverfahren eine Abkehr von konventionellen Pressvorgängen dar, bei denen Presslinge für Hartmetallwerkzeuge primär durch vertikale Stempel verdichtet werden, die Hauptpressachsen definieren.

Gemäß einer beispielhaften Ausgestaltung umfasst das Verfahren ferner die Schritte:
- Bereitstellung zumindest eines seitlichen Formteils, das ferner einen Abschnitt einer Unterseite der Kavität definiert,
- Zuführen zumindest eines Formunterteils, das einen Abschnitt einer Unterseite der Kavität definiert, und
- Festhalten des Formunterteils gemeinsam mit dem Festhalten des seitlichen Formteile und des Formoberteils.

Auf diese Weise ist weder an der Oberseite der Kavität, über die die Kavität mit dem Hartmetallpulver befüllt wird, noch an der Unterseite der Kavität ein Stempel vorgesehen. Die gewünschte Gestalt des Presslings an der Oberseite und an der Unterseite kann durch das Formunterteil und das Formoberteil definiert werden. Ferner können insbesondere Übergänge, etwa Radien, Fasen oder Ähnliches, zwischen oberen/unteren Grundflächen des Presslings und einem Umfangsbereich durch die (seitlichen) Formteile definiert werden. Ein Vorteil dieser Gestaltung ist, dass die seitlichen Formteile in diesem Bereich dickwandig gestaltet sein können. Dies erhöht die Robustheit und Standzeit der Matrize.

Gemäß einer weiteren beispielhaften Ausgestaltung ist zumindest ein seitliches Formteil vorgesehen, das neben zumindest einer Seitenfläche der Kavität auch einen Abschnitt der Oberseite und einen Abschnitt der Unterseite der Kavität bildet.

Gemäß einer weiteren beispielhaften Ausgestaltung sind die seitlichen Formteile, das Formoberteil und das Formunterteil während des Verdichtens arretiert bzw. festgehalten, wobei die seitlichen Stempelteile zum Verdichten des Pulvers bewegt werden. Vorzugsweise gibt es neben den seitlichen Stempelteilen keine weiteren Stempelteile. Gleichwohl ist es gemäß zumindest einigen Ausführungsbeispielen nicht vollständig ausgeschlossen, dass Hilfsstempel und dergleichen vorgesehen sind. Gleichwohl ist es bevorzugt, wenn die seitlichen Stempelteile die Hauptstempelachsen oder Hauptpressachsen definieren.

Während des Verdichtens oder des Pressvorgangs sind die seitlichen Formteile, das Formoberteil und das Formunterteil vorzugsweise fixiert. Das Verdichten erfolgt durch die Stempelteile.

Gemäß einer weiteren beispielhaften Ausgestaltung umfasst das Verdichten ein seitliches Verdichten durch die Stempelteile, wobei eine jeweilige Bewegungsrichtung der Stempelteile parallel zu einer Ebene orientiert ist, die schräg, insbesondere senkrecht, zu einer Zuführrichtung des Formoberteils orientiert ist.

Somit sind Hauptpressrichtungen beispielsweise parallel zu einer Horizontalebene orientiert und nicht senkrecht dazu. Vorzugsweise ist eine Mehrzahl von Stempelteilen vorgesehen, die etwa sternförmig um die Kavität herum angeordnet sind. Auf diese Weise lässt sich eine Mehrzahl von Pressachsen verwirklichen, so dass insgesamt eine homogene Gefügestruktur erzielbar ist.

Die seitlichen Formteile und die Stempelteile sind parallel zu einer ersten Ebene bewegbar, die einer Horizontalebene ist, wobei das Formoberteil, insbesondere auch das Formunterteil, parallel zu einer zweiten Ebene bewegbar sind, die einer Vertikalebene ist. Mit anderen Worten sind die Formteile vorzugsweise senkrecht zu einer Bewegungsrichtung des Formoberteils bzw. des Formunterteils bewegbar. Die Stempelteile sind jeweils in einer Querrichtung relativ zur Kavität bewegbar.

Gemäß einer weiteren beispielhaften Ausgestaltung ist das Formoberteil mit einem Vertikalschieber gekoppelt, der eine Ausnehmung im Pressling ausbildet, insbesondere eine den Pressling vertikal durchragende Ausnehmung, wobei der Vertikalschieber parallel zum Formoberteil bewegbar ist, und wobei insbesondere auch das Formunterteil mit einem korrespondieren Vertikalschieber gekoppelt ist.

Es sind alternative Ausgestaltungen vorstellbar, bei denen die Vertikalschieber in das Formoberteil und/oder das Formunterteil integriert sind. Gemäß weiteren beispielhaften Ausgestaltungen sind das Formoberteil und der zugeordnete Schieber und das Formunterteil und der zugeordnete Schieber relativ zueinander beweglich.

Vorzugsweise weist das Formoberteil eine Führungsausnehmung für einen Vertikalschieber auf. Vorzugsweise weist das Formunterteil eine Führungsausnehmung für einen Vertikalschieber auf. Demgemäß lässt sich eine kompakte Gestaltung der Matrize verwirklichen. Sofern zwei Vertikalschieber, ein oberer Vertikalschieber und ein unterer Vertikalschieber, verwendbar sind, lässt sich beim Pressling eine Ausnehmung oder durchgehende Bohrung formen, die vollständig oder im Wesentlichen symmetrisch zu einer horizontalen Mittelebene des Presslings ist.

Gemäß einer weiteren beispielhaften Ausgestaltung umfasst der Schritt des Zuführens der seitlichen Formteile ein Zuführen von drei oder mehr seitlichen Formteilen, die aufeinander zu und voneinander weg bewegbar sind, um die Kavität zu öffnen oder zu schließen.

Gemäß zumindest einigen beispielhaften Ausführungsformen wird die Kavität ausschließlich durch bewegliche Formteile und die Stempel gebildet. Demgemäß wird die Kavität nicht durch feste Matrizenteile gebildet. Die drei oder mehr seitlichen Formteile sind etwa kreisförmig und/oder umfänglich um ein Zentrum der Kavität verteilt und in Richtung auf das Zentrum der Kavität verfahrbar.

Gemäß einer beispielhaften Weiterbildung dieser Ausgestaltung definieren die seitlichen Formteile gemeinsam eine horizontale Begrenzung für den Pressling. Mit anderen Worten wird ein Umfangsbereich des Presslings, der sich zwischen einer oberen und einer unteren Grundfläche erstreckt, nicht durch feste/starre Matrizenteile gebildet. Wenn die Kavität matrizenseitig ausschließlich oder nahezu vollständig durch bewegliche Formteile gebildet wird, erhöht sich die Gestaltungsfreiheit weiter.

Gemäß einer weiteren beispielhaften Ausgestaltung werden die Kavität und eine sich ergebende Gestalt des Presslings vollständig durch bewegliche Matrizenteile und Stempelteile definiert.

Gemäß einer weiteren beispielhaften Ausgestaltung ist jedem seitlichen Formteil ein Stempelteil zugeordnet, das in der Führungsausnehmung angeordnet ist, wobei eine Bewegungsrichtung des Stempelteils parallel zur Bewegungsrichtung des seitlichen Formteils ist. Auf diese Weise lässt sich ein Pressling erzeugen, auf dessen Basis ein Schneideinsatz herstellbar ist, der eine Mehrzahl von Schneiden aufweist.

Gemäß einer weiteren beispielhaften Ausgestaltung sind zumindest zwei Stempelteile, insbesondere zwei Paare von Stempelteilen, vertikal zueinander versetzt. Dies hat den Vorteil, dass ein besonders homogener und günstiger Gefügeverlauf erzielbar ist. Der Pressling wird somit nicht nur in einer Richtung, sondern in zwei oder gar mehr Richtungen verdichtet. Ein Vorteil dieser Gestaltung ist ferner, dass sich auch bei den Formteilen der Matrize eine größere Gestaltungsfreiheit ergibt, da weitere Bereiche der sich ergebenden Kavität durch die Stempelteile unter Druck gesetzt werden können.

Gemäß einer weiteren beispielhaften Ausgestaltung bilden die Stempelteile Abschnitte der Gestalt des Presslings aus, die nicht vertikal entformbar sind. Dabei kann es sich insbesondere um Spanflächen handeln, die muldenartig ausgestaltet sind. Insbesondere dann, wenn der Pressling drei, vier oder mehr Schneiden aufweist, die etwa über einen Umfangsbereich des Presslings verteilt angeordnet sind, können die Spanflächen nicht ohne weiteres gemäß konventioneller Verfahren entformt werden.

Gemäß einer weiteren beispielhaften Ausgestaltung bilden die seitlichen Formteile einen Übergang zwischen einem Umfangsbereich und zumindest einer oberen oder unteren Grundfläche des Presslings aus, wobei der Übergang insbesondere einen Radius oder eine Fase umfasst.

Ein solcher Bereich kann nicht ohne weiteres durch das Formoberteil und/oder das Formunterteil ausgebildet werden. Dies würde bei vertikal verfahrbaren Formteilen zu einer deutlichen Wandstärkenreduzierung führen. Es ist von Vorteil, die seitlichen Formteile beweglich auszuführen, da auf diese Weise entsprechende Übergänge an der Oberseite und der Unterseite des Presslings ausgebildet werden können. Trotzdem kann der Pressling ohne weiteres entformt werden, wenn die Formteile beweglich sind.

Gemäß einer weiteren beispielhaften Ausgestaltung wird zumindest eine obere oder untere Grundfläche, vorzugweise beide Grundflächen, des Presslings in der Kavität stempellos erzeugt. Mit anderen Worten erlaubt die stempelfreie Erzeugung der oberen Grundfläche und/oder der unteren Grundfläche einen Gefügeverlauf, der im Wesentlichen durch die seitlichen Stempel bedingt ist.

Gemäß einer weiteren beispielhaften Ausgestaltung sind zur Ausbildung eines Presslings für eine Wendeschneidplatte mit rhombischer Form vier seitliche Formteile vorgesehen, die zumindest abschnittsweise vier Seiten des Presslings definierten und mit vier seitlichen Stempelteilen gekoppelt sind, die vier Spanflächen in vier Umfangsseiten des Presslings definieren, wobei ein Formoberteil zur Ausbildung einer oberen Grundfläche und ein Formunterteil zur Ausbildung einer unteren Grundfläche vorgesehen sind, die mit einem oberen Vertikalschieber und einem unteren Vertikalschieber gekoppelt sind, die einander kontaktieren, wobei der obere Vertikalschieber und der untere Vertikalschieber gemeinsam eine Durchgangsöffnung am Pressling ausbilden.

Ein solcher Pressling eignet sich insbesondere zur Herstellung einer Wendeschneidplatte, die beispielhaft mit vier Schneiden versehen ist, die in zwei Paare unterteilt sind. Jeweils ein Paar der Schneiden ist der Oberseite des Presslings und der Unterseite des Presslings zugeordnet. Die Schneiden des Paares auf der Oberseite sind einander gegenüberliegend angeordnet. Die Schneiden des Paares auf der Unterseite sind einander gegenüberliegend angeordnet. Die Paare der Oberseite und der Unterseite sind relativ zueinander quer orientiert. Eine derartige Wendeschneidplatte wird beispielhaft in der DE 10 2012 108 752 B3 beschrieben.

Die rhombische Form kann auch als Rautenform beschrieben werden. Bei der Spanfläche handelt es sich insbesondere um eine Spanmulde auf einer Seite des Umfangsbereichs des Presslings.

Gegenstand der Offenbarung ist ferner ein Verfahren zur Herstellung von Hartmetall-Schneidwerkzeugen, insbesondere von Schneideinsätzen, umfassend:
- Herstellung eines Presslings gemäß einer Ausgestaltung des hierin beschriebenen Verfahrens,
- nachbearbeitungsarmes oder nachbearbeitungsfreies Teile-Handling, insbesondere Transfer von einer Pressanlage zu einer Sinteranlage, und
- Sintern der Presslinge.

Unter Teile-Handling ist insbesondere eine Teilehandhabung zu verstehen, die beispielsweise ein Umsetzen der Presslinge von der Pressvorrichtung hin zu einer Sintervorrichtung umfasst. Gegebenenfalls kann zwischendurch eine temporäre Lagerung erfolgen. Gelichwohl können auch definierte Bearbeitungsschritte am Pressling durchgeführt werden, wie z. B. ein automatisiertes Entgraten. Das Entgraten kann etwa durch Bürsten oder Blasen erfolgen und betrifft üblicherweise unverpresste Bestandteile am Pressling

Die Herstellung des Presslings gemäß einer Ausführungsform des hier beschriebenen Verfahrens reduziert den Nachbearbeitungsaufwand deutlich.

Die Vorrichtung betreffend wird die Aufgabe der Erfindung durch eine Vorrichtung zur endkonturnahen Herstellung von Hartmetallpresslingen, insbesondere zur Herstellung von Sinterrohlingen für Schneidwerkzeuge gelöst, die mit einem Bett, einer am Bett aufgenommenen mehrteiligen Matrize zur Ausbildung einer Kavität für einen Pressling, die eine Mehrzahl seitlicher Formteile umfasst, die die Seitenflächen der Kavität definieren, wobei zumindest ein seitliches Formteil ferner einen Abschnitt einer Oberseite der Kavität definiert, wobei die seitlichen Formteile parallel zu einer ersten Ebene bewegbar sind, um die seitlichen Formteile zuzuführen, wobei die erste Ebene eine Horizontalebene ist, einem Formoberteil, das einen Abschnitt der Oberseite der Kavität definiert, wobei das Formoberteil parallel zu einer zweiten Ebene bewegbar ist, um das Formoberteil zuzuführen, wobei die zweite Ebene eine Vertikalebene ist, einer Stempeleinheit mit zumindest zwei seitlichen Stempelteilen, wobei zumindest zwei seitliche Formteile mit einer Führungsausnehmung für jeweils ein seitliches Stempelteil versehen sind, wobei die seitlichen Stempelteile parallel zu der ersten Ebene bewegbar sind, um die seitlichen Stempelteile zuzuführen, wobei die erste Ebene eine Horizontalebene ist, und einer Fülleinheit mit einem Füllschuh versehen ist, der einer Öffnung der Kavität zuführbar ist, um die Kavität mit einem Hartmetallpulver zu befüllen, wobei die seitlichen Formteile und das Formoberteil zwischen einer geöffneten Stellung und einer Schließstellung verfahrbar sind, wobei die seitlichen Formteile und das Formoberteil in der Schließstellung Flächen des Presslings definieren, wobei die seitlichen Stempelteile entlang der Führungsausnehmungen in den seitlichen Formteilen verfahrbar sind, um das Pulver zu verdichten, wobei eine Bewegungsrichtung der Stempelteile parallel zu einer Ebene orientiert ist, die senkrecht zu einer Zuführrichtung des Formoberteils orientiert ist, und wobei die Kavität über die Oberseite mit dem Hartmetallpulver Schwerkraft-unterstützt befüllbar ist.

Gemäß einer beispielhaften Ausgestaltung weist die Vorrichtung ein Formunterteil auf, das einen Abschnitt einer Unterseite der Kavität definiert, wobei zumindest ein seitliches Formteil ferner einen Abschnitt einer Unterseite der Kavität definiert, und wobei die seitlichen Formteile, das Formoberteil und das Formunterteil in der Schließstellung arretierbar bzw. fixierbar sind.

Die seitlichen Formteile und die seitlichen Stempelteile sind parallel zu einer ersten Ebene bewegbar, die eine Horizontalebene ist, wobei das Formoberteil, insbesondere auch das Formunterteil, parallel zu einer zweiten Ebene bewegbar sind, die eine Vertikalebene ist.

Gemäß einer weiteren beispielhaften Ausgestaltung umfasst die Vorrichtung ferner eine Halteeinheit oder Fixiereinheit, die die seitlichen Formteile, das Formoberteil und das Formunterteil in der geschlossenen Stellung fixiert, um einen Umfangsbereich des Presslings auszubilden.

Gemäß einer weiteren beispielhaften Ausgestaltung ist das Formoberteil mit einem Vertikalschieber gekoppelt, der eine Ausnehmung im Pressling ausbildet, insbesondere eine den Pressling vertikal durchragende Ausnehmung, wobei der Vertikalschieber parallel zum Formoberteil bewegbar ist, wobei insbesondere auch das Formunterteil mit einem korrespondieren Vertikalschieber gekoppelt ist.

Gemäß einer weiteren beispielhaften Ausgestaltung erfolgt das Verdichten des Pulvers im Wesentlichen, vorzugsweise ausschließlich, durch die seitlichen Stempelteile.

Gemäß einer weiteren beispielhaften Ausgestaltung bilden die seitlichen Formteile einen Übergang zwischen einem Umfangsbereich und zumindest einer oberen oder unteren Grundfläche des Presslings aus, wobei der Übergang insbesondere einen Radius oder eine Fase umfasst.

Gemäß einer Ausgestaltung des hierin beschriebenen Verfahrens kann ein Hartmetallpressling gefertigt werden, insbesondere ein nachbearbeitungsarm oder nachbearbeitungsfrei erzeugter Pressling für ein Wendewerkzeug, mit zwei Grundflächen, die einander gegenüberliegend angeordnet sind, einem Umfangsbereich, der sich zwischen den zwei Grundflächen erstreckt, und mit einer Mehrzahl von Schneiden, die durch einen Trennungsverlauf einer mehrteiligen Matrize definiert sind, wobei zumindest eine Schneide einer ersten Grundfläche und zumindest eine Schneide einer zweiten Grundfläche zugeordnet ist, wobei den Schneiden im Umfangsbereich muldenförmige Spanflächen zugeordnet sind, die nicht senkrecht zu den Grundflächen entformbar sind, wobei die Schneiden und die Spanflächen zumindest teilwiese durch Stempelteile definiert sind, die quer zu einer Normalen der Grundflächen zuführbar sind und einen entsprechend orientierten Gefügeverlauf bewirken, und wobei die Grundflächen stempelfrei durch Formteile definiert werden, die quer zur Normalen der Grundflächen zuführbar sind, und Formteile, die parallel zur Normalen der Grundflächen zuführbar sind.

Vorzugsweise wird der Pressling in einer Ausgestaltung der hier beschriebenen Vorrichtung gefertigt.

Bei dem Pressling handelt es sich insbesondere um einen Hartmetall-Schneideinsatz, der vier Schneiden (A, B, C, D) aufweist, von denen jeweils zwei (A, B sowie C, D) zueinander drehsymmtrisch um eine Zentralachse ausgebildet sind. Ferner besteht eine Symmetrie zwischen einer Oberseite (umfassend die Schneiden A und B) und einer Unterseite (umfassend die Schneiden C und D) des Schneideinsatzes. Vorzugsweise weist der Pressling keine durch die Matrize der Pressvorrichtung bedingten Grate auf, die Schneidkanten der Schneiden kreuzen.

Sofern auf Basis des nachbearbeitungsarm oder nachbearbeitungsfrei erzeugten Presslings ein Schneidwerkzeug erzeugt ist, kann man diesem ansehen, ob es gemäß einer Ausgestaltung des hierin beschriebenen Verfahrens und/oder in einer Ausgestaltung der hierin beschriebenen Vorrichtung gefertigt ist. Insbesondere Gratverläufe, der Verlauf der Trennebene und die sonstige Gestaltung, umfassend etwa Bereiche, die nicht ohne weiteres mittels (seitlicher) Schieber entformbar sind, erlauben einen entsprechenden Rückschluss.

Am Pressling können insbesondere nachbearbeitungsarm oder nachbearbeitungsfrei erzeugt werden: Schneidkanten, tangentiale Übergänge, Spanmulden, Freiflächen oder Freiwinkel, Verjüngungen und dgl.

Die Offenbarung ist nicht auf derartige Schneideinsätze beschränkt, insbesondere nicht ausschließlich auf die weiter oben beschriebenen Schneidplatten mit vier spezifisch angeordneten und ausgerichteten Schneiden. Gleichwohl wird zu Veranschaulichungszwecken auf diese Art von Schneideinsätzen Bezug genommen.

Es versteht sich, dass die vorstehend genannten und die nachstehend noch zu erläuternden Merkmale der Offenbarung nicht nur in der jeweils angegebenen Kombination, sondern auch in anderen Kombinationen oder in Alleinstellung verwendbar sind, ohne den Rahmen der vorliegenden Erfindung zu verlassen.

Weitere Merkmale und Vorteile ergeben sich aus der nachfolgenden Beschreibung bevorzugter Ausführungsbeispiele unter Bezugnahme auf die Zeichnungen. Es zeigen:
- Fig. 1: eine perspektivische Ansicht eines Hartmetall-Schneidwerkzeugs, welches gemäß zumindest einigen Aspekten der vorliegenden Offenbarung herstellbar ist;
- Fig. 2: eine Draufsicht der Anordnung gemäß Fig. 1;
- Fig. 3: eine erste Seitenansicht der Anordnung gemäß Fig. 2;
- Fig. 4: eine zweite Seitenansicht der Anordnung gemäß Fig. 2;
- Fig. 5: eine perspektivische Teildarstellung eines Kopfes eines Werkzeugs, das mit Hartmetall-Wendeschneidplatten bestückbar ist;
- Fig. 6: eine schematische perspektivische Darstellung einer Pressvorrichtung für Hartmetallpresslinge, in einem explodierten Zustand;
- Fig. 7: eine perspektivische Darstellung der Vorrichtung gemäß Fig. 6 in einem geschlossenen Zustand;
- Fig. 8: eine Draufsicht der Anordnung gemäß Fig. 7;
- Fig. 9: eine Schnittansicht der Anordnung gemäß Fig. 8 entlang der Linie IX-IX;
- Fig. 10: eine Schnittansicht der Anordnung gemäß Fig. 8 entlang der Linie X-X;
- Fig. 11: eine weitere perspektivische Darstellung der Vorrichtung gemäß Fig. 6 in einer Orientierung gemäß Fig. 7, wobei sich die Vorrichtung in einem zweiten Zustand befindet;
- Fig. 12: eine Draufsicht der Anordnung gemäß Fig. 11;
- Fig. 13: eine Schnittansicht der Anordnung gemäß Fig. 12 entlang der Linie XIII-XIII;
- Fig. 14: eine Schnittansicht der Anordnung gemäß Fig. 12 entlang der Linie XIV-XIV;
- Fig. 15: eine weitere perspektivische Darstellung der Anordnung gemäß Fig. 6 in einer Orientierung gemäß Fig. 7, wobei sich die Vorrichtung in einem dritten Zustand befindet;
- Fig. 16: eine Draufsicht der Anordnung gemäß Fig. 15;
- Fig. 17: eine Schnittansicht der Anordnung gemäß Fig. 16 entlang der Linie XVII-XVII;
- Fig. 18: eine Schnittansicht der Anordnung gemäß Fig. 16 entlang der Linie XVIII-XVIII; und
- Fig. 19: ein schematisches Blockschaltbild zur Veranschaulichung einer beispielhaften Ausgestaltung eines Verfahrens zur Herstellung von Hartmetallpresslingen.

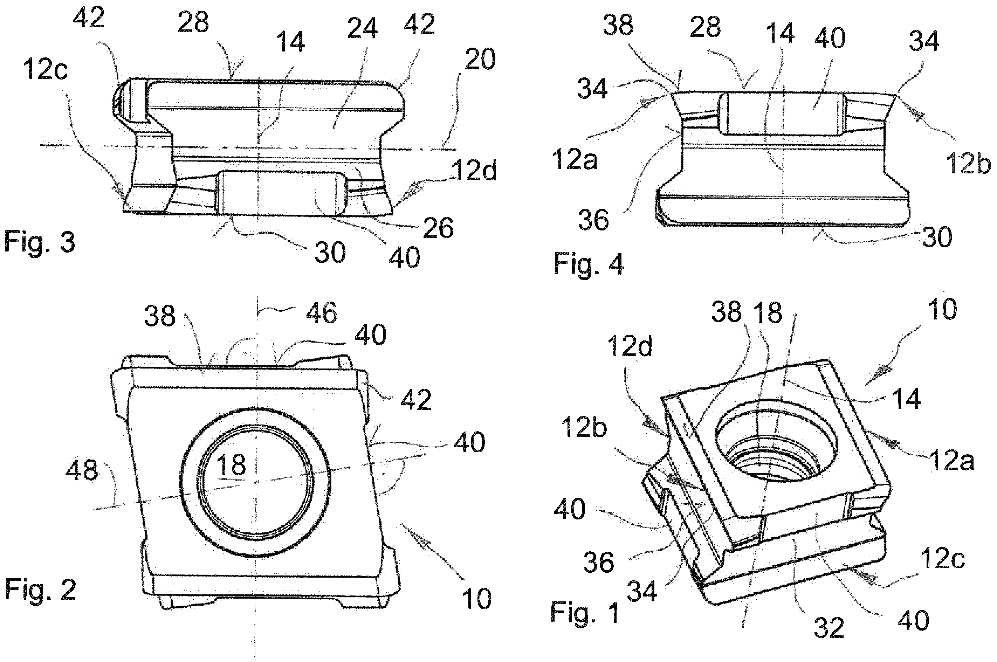

Mit Bezugnahme auf die Fig. 1, 2, 3 und 4 wird eine beispielhafte Ausgestaltung eines Presslings 10 veranschaulicht, der für die pulvermetallurgische Herstellung eines Hartmetallwerkzeugs, insbesondere eines Schneideinsatzes, verwendbar ist. Vorzugsweise ist der Pressling 10 gemäß zumindest einigen Ausgestaltungen der vorliegenden Offenbarung nachbearbeitungsfrei oder nachbearbeitungsarm mittels Pulverpressen herstellbar. Dies bedarf jedoch einer spezifischen Gestaltung einer Vorrichtung bzw. eines spezifischen Verfahrens zur Herstellung des Presslings 10.

Zumindest ähnlich gestaltete Schneideinsätze sind aus der DE 10 2012 108 752 B3 bekannt. Jedoch war es bislang erforderlich, die Sinterrohlinge zur Herstellung derartiger Schneidwerkzeuge durch Spritzgießen und umfangreiche Nachbearbeitungen zu erzeugen. Gemäß der vorliegenden Offenbarung ist der Pressling 10 nachbearbeitungsarm oder nachbearbeitungsfrei herstellbar, und zwar durch ein Pressverfahren. Mit anderen Worten kann die Spritzguss-basierte Herstellung des Sinterrohlings durch ein zumindest endkonturnahes Pressverfahren ersetzt werden.

Es versteht sich, dass der Pressling 10 vorrangig als Veranschaulichungsbeispiel für eine große Vielfalt und Vielzahl weiterer Presslinge dient, deren Herstellung gemäß hierin beschriebenen Aspekten und Ausführungsbeispielen erfolgen kann, die die beschriebene Vorrichtung und/oder das beschriebene Verfahren nutzen.

In Zusammenschau der Fig. 1, 2, 3 und 4 wird ersichtlich, dass der Pressling 10 insgesamt vier Schneiden 12 aufweist, die in Fig. 1 mit 12a, 12b, 12c und 12d (in Fig. 1 verdeckt) bezeichnet sind. Ferner weist der Pressling 10 eine Zentralachse 14 auf, die durch eine Ausnehmung 18 definiert ist. Die Zentralachse 14 ist ferner eine Symmetrieachse einiger Gestaltungsmerkmale. Die Ausnehmung 18 dient zur Befestigung des auf Basis des Presslings 10 erzeugten Schneideinsatzes am Werkzeug.

Wenn der auf dem Pressling 10 basierende Schneideinsatz um 180° um die Zentralachse 14 gedreht wird, können eine erste Schneide 12a und eine zweite Schneide 12b nacheinander genutzt werden. Der Pressling 10 weist jedoch insgesamt vier Konturen auf, die Schneiden 12a, 12b, 12c und 12d definieren.

Um auch die weiteren Schneiden 12c und 12d nutzen zu können, ist der Pressling 10 nicht nur 180°-drehsymmetrisch im Hinblick auf die Zentralachse 14 ausgebildet. Ferner ist eine Mittelebene oder Symmetrieebene 20 vorgesehen, vgl. Fig. 3. Mit anderen Worten sind auf einer Seite der Mittelebene 20 die Schneiden 12a, 12b und auf der anderen, gegenüberliegenden Seite der Mittelebene 20 die Schneiden 12c und 12d angeordnet. Demgemäß kann das auf dem Pressling 10 basierende Schneidwerkzeug umgedreht werden, um ausgehend von einer Seite der Mittelebene 20 die andere Seite nutzbar zu machen. Mit anderen Worten kann der auf dem Pressling 10 basierende Schneideinsatz um die Zentralachse 14 und/oder um eine weitere Achse, die in der Mittelebene 20 liegt, rotiert bzw. verschwenkt werden, um eine der vier Schneiden 12a, 12b, 12c und 12d nutzbar zu machen.

Die Mittelebene 20 untergliedert den Pressling 10 in einen ersten Teilkörper 24 und einen zweiten Teilkörper 26, die grundsätzlich ähnlich, vorzugsweise identisch ausgebildet sind und zueinander eine definierte Drehlage aufweisen.

Am Pressling 10 sind Grundflächen 28, 30 ausgebildet. Die Grundfläche 28 kann auch als obere Grundfläche bezeichnet werden. Die Grundfläche 30 kann auch als untere Grundfläche bezeichnet werden. Die Grundflächen 28, 30 erstrecken sich im Wesentlichen parallel zur Mittelebene 20.

Zwischen den Grundflächen 28, 30 ist ein Umfangsbereich 32 ausgebildet. Beispielhaft umfasst der Umfangsbereich 32 insgesamt vier (seitliche) Seiten, denen jeweils eine Schneide 12a, 12b, 12c, 12d zugeordnet ist.

Die Schneiden 12a, 12b, 12c, 12d umfassen jeweils eine Schneidkante 34, die sich zwischen einer Spanfläche 36 und einer Freifläche 38 erstreckt. Die Spanfläche 36 kann auch als Spanmulde bezeichnet werden. Die Freifläche 38 ist einer der Grundflächen 28, 30 zugeordnet. Insbesondere der in Fig. 4 gezeigten Darstellung ist entnehmbar, dass die Freifläche 38 leicht gegenüber der Grundfläche 28, 30 bzw. der Mittelebene 20 geneigt ist.

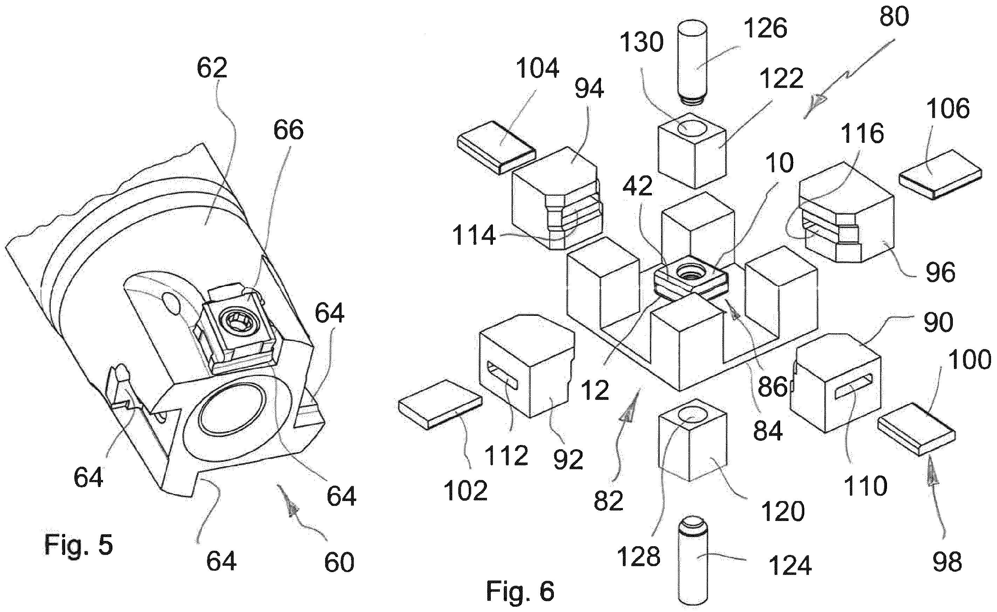

Ferner weist der Pressling 10 insgesamt vier Anlageflächen 40 auf, die jeweils einer Seite des Umfangsbereichs 32 zugeordnet sind. Die Anlageflächen 40 sind dazu ausgebildet, den Pressling 10 auszurichten, wenn dieser an einem Bearbeitungswerkzeug 60 (vgl. Fig. 5) aufgenommen wird.

Auf jeder der vier Seiten des Umfangsbereichs 32 ist die jeweilige Schneide 12 einer der beiden Grundflächen 28, 30 und die Anlagefläche 40 der anderen der Grundflächen 28, 30 zugeordnet. Gegenüberliegende Seiten des Umfangsbereichs 32 weisen bezüglich der Zentralachse 14 eine 180°-drehsymmetrische Gestaltung auf. Benachbarte Seiten des Umfangsbereichs 32 weisen eine alternierende Zuordnung zwischen den Schneiden 12, der Anlagefläche 40 und den Grundflächen 28, 30 auf, vgl. wiederum die Fig. 1 bis 4.

Anhand der Fig. 2 wird ersichtlich, dass der Pressling 10 eine rhomboidische Gestaltung aufweist, also eine leichte Verschränkung. In Fig. 2 sind mit 46, 48 bezeichnete Querrichtungen angedeutet, die jeweils als Normalen auf die Anlageflächen 40 definiert sind. Es wird ersichtlich, dass die Richtungen 46, 48 nicht genau senkrecht zueinander orientiert sind.

Fig. 5 veranschaulicht anhand einer Teildarstellung eines Bearbeitungswerkzeugs 60 eine mögliche Verwendung eines Schneideinsatzes 66, der auf Basis des Presslings 10 erzeugbar ist. Der Schneideinsatz 66 kann auch als Schneidplatte bezeichnet werden. Insbesondere ist der Schneideinsatz 66 als Wendeschneidplatte mit vier Schneiden ausgebildet.

Bei dem beispielhaft gezeigten Bearbeitungswerkzeug 60 handelt es sich um einen Schaftfräser, der mit einem Schaft 62 versehen ist. An einem Bearbeitungsende des Schafts 62 sind vier Aufnahmen 64 ausgebildet, die entsprechende Ausnehmungen aufweisen, um jeweils einen Schneideinsatz 66 aufnehmen zu können. Die Lagezuordnung und Ausrichtung der Schneideinsätze 66 erfolgt hierbei über die Anlageflächen 40 sowie die Grundflächen 28, 30, vgl. wiederum Fig. 1, Fig. 2, Fig. 3 und Fig. 4. Die Befestigung des Schneideinsatzes 66 erfolgt üblicherweise über eine Schraube oder ein ähnliches Befestigungselement, das die Ausnehmung 18 durchragt. Der Schneideinsatz 66 kann auch als Tangentialschneider bezeichnet werden.

Die anhand der Fig. 1 bis 5 veranschaulichte Ausgestaltung des Presslings 10 und des darauf basierenden Schneideinsatzes 66 zeigen, dass eine urformende Fertigung eines entsprechenden Sinterrohlings gewissen Randbedingungen unterliegt.

Zum einen sind über den Umfangsbereich 32 des Presslings 10 insgesamt vier Schneiden 12a, 12b, 12c und 12d ausgebildet. Dies heißt mit anderen Worten, ein übliches Presswerkzeug mit einem Oberstempel und einem Unterstempel, die eine Hauptpressachse definieren, kann nicht genutzt werden, um auf allen vier Seiten des Umfangsbereichs 32 entsprechende Konturen zu gestalten.

Gleichwohl ist es von Vorteil, den Pressling 10 derart anzuordnen, dass die Grundflächen 28, 30 in einer Kavität eines Presswerkzeugs jeweils einer Oberseite und einer Unterseite zugeordnet sind. Mit anderen Worten müssen seitliche Formgebungsabschnitte zur Ausformung des Umfangsbereichs 32 vorgesehen sein. Mit Verweis auf Fig. 4 wird ersichtlich, dass die muldenartig gestaltete Spanfläche 36 nicht ohne weiteres "von oben" oder "von unten", also parallel zur Zentralachse 14, entformt werden kann. Insbesondere im Bereich der Schneidkante 34 ergibt sich beim Übergang von der Freifläche 38 zur Spanfläche 36 eine dünne, spitz auslaufende Kontur. In diesem Bereich kann nicht ohne weiteres ein Stempel "von oben" oder "von unten" zum Verdichten des Hartmetallpulvers genutzt werden. Im Bereich der Schneidkanten 34 würden dann Brüche und Ähnliches drohen.

Sofern jedoch der Bereich der Freifläche 38 und der Spanfläche 36 ausschließlich durch feste Matrizenteile ausgebildet wird, kann in diesem spitz auslaufenden Kantenbereich kein genügend hoher Pressdruck erzeugt werden. Mit anderen Worten könnten sich genau in den später hoch belasteten Bereichen des Presslings 10 Bereiche ergeben, bei denen keine ausreichende Verdichtung erfolgt ist.

Eine weitere Randbedingung betrifft den gewünschten Gefügeverlauf bzw. die gewünschte Gefügestruktur bei den Schneiden 12a, 12b, 12c und 12d. Im Betrieb soll jede der vier Schneiden 12a, 12b, 12c, 12d möglichst ähnliche oder gar identische Eigenschaften, Standzeiten, Festigkeiten und Ähnliches aufweisen. Aus diesem Grund kann der Pressling 10 auch nicht mit einem Presswerkzeug hergestellt werden, das beispielsweise einen Ober- und einen Unterstempel aufweist, die als Hauptstempel fungieren, die mit (seitlichen) Hilfsstempeln zusammenwirken. Eine solche Gestaltung hätte zum Ergebnis, dass die gewünschte Homogenität - die Schneiden 12a, 12b, 12c, 12d betreffend - nicht ohne weiteres gegeben wäre.

Eine Möglichkeit zur Herstellung eines Sinterrohlings mit einer Gestaltung gemäß den Fig. 1, 2, 3 und 4 besteht daher im Spritzgussverfahren. Dies erfordert jedoch weiterhin eine nicht unerhebliche Nachbearbeitung. Ferner lässt sich das Hartmetallpulver im Spritzgussverfahren nicht so gleichmäßig verteilen wie bei dem Pressverfahren gemäß der vorliegender Offenlegung, was zu erheblichen maßlichen Unterschieden zwischen den 4 Schneiden beim gesinterten Spritzgussteil führt.

Es ist von Vorteil, wenn der Verlauf der Schneidkanten 34 der jeweiligen Schneiden 12 durch einen Trennverlauf bzw. Trennebenen im Presswerkzeug definiert ist. Eine weitere Randbedingung geht dahin, dass möglichst keine Trenngrate quer zum Verlauf der Schneidkanten 34 vorgesehen sind.

Mit Verweis auf die Fig. 6 bis 18 werden nachfolgend beispielhaft Aspekte und Ausgestaltungen einer Vorrichtung sowie eines Verfahrens zur endkonturnahen Erzeugung von Hartmetallpresslingen veranschaulicht. Die Vorrichtung ist insgesamt mit 80 bezeichnet. Gemäß zumindest einem Ausführungsbeispiel ist die Vorrichtung 80 dazu ausgestaltet, Hartmetallpresslinge auf Basis von Hartmetallpulver zu erzeugen, deren Gestalt der Form des anhand der Fig. 1 bis 4 veranschaulichten Presslings 10 zumindest ähnlich ist.

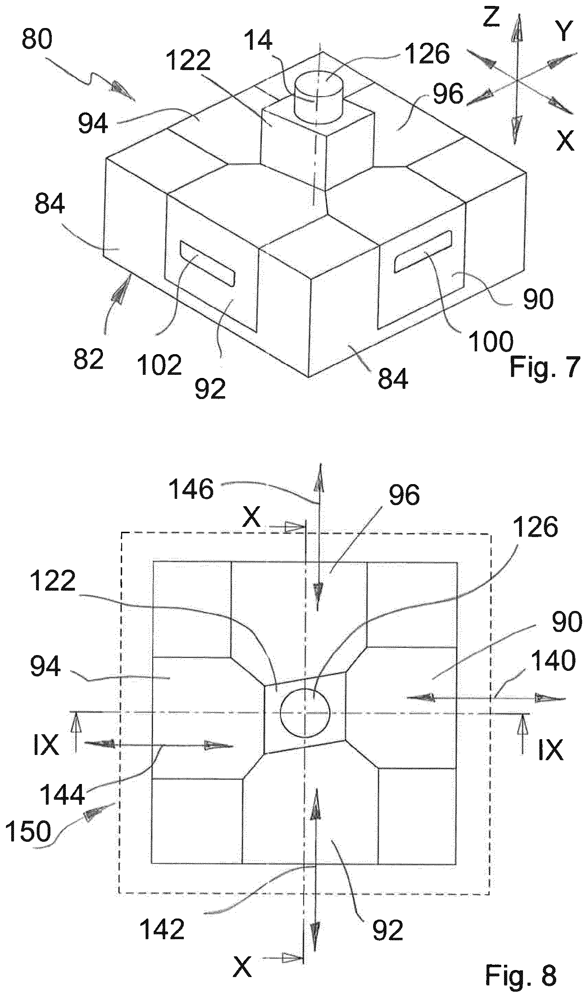

Die Fig. 6 bis 18 zeigen aus Veranschaulichungsgründen vereinfachte Darstellungen des Presslings 10 sowie von Komponenten der Vorrichtung 80. Die Orientierung des Presslings 10 sowie der Vorrichtung 80 wird durch ein Koordinatensystem X, Y, Z veranschaulicht, welches in den Fig. 7, 11 und 15 dargestellt ist. In den exemplarisch gezeigten Ausführungsbeispielen bezeichnet die Achse Z eine Höhenrichtung oder Vertikalrichtung. Jede Ebene, die parallel zur Z-Achse angeordnet ist, kann als Vertikalebene bezeichnet werden. Eine X-Achse bezeichnet eine Längsrichtung. Eine Y-Achse bezeichnet eine Querrichtung. Die X-Achse und die Y-Achse können vereinheitlichend auch als seitliche Achsen bezeichnet werden. Gemeinsam definieren die X-Achse und die Y-Achse eine Horizontalebene, die senkrecht zur Z-Achse und senkrecht zur Vertikalebene ist.

Es versteht sich, dass andere Zuordnungen und Bezeichnungen verwendbar sind. Der Fachmann kann die erforderlichen gedanklichen Transformationen und Zuordnungen ohne weiteres nachvollziehen. Dasselbe gilt auch für Lage- und Richtungsangaben wie oben, unten, seitlich, quer, vorne, hinten und dergleichen. Auf das Koordinatensystem X, Y, Z wird nachfolgend zu Veranschaulichungszwecken wiederholt Bezug genommen.

Die Vorrichtung 80 umfasst eine Matrize 82, die als mehrteilige Matrize gestaltet ist. Die Matrize 82 ist mit einem Bett 84 gekoppelt bzw. am Bett 84 aufgenommen. Das Bett 84 kann auch als Gestell oder Rahmen bezeichnet werden. Die Matrize 82 bildet eine Kavität 86 aus, die mit einem Hartmetallpulver befüllt werden kann, um durch Aufbringen von Druck einen Pressling 10 auszuformen.

Die Matrize 82 umfasst seitliche Formteile 90, 92, 94, 96. Die Formteile 90, 92, 94, 96 sind parallel zur Horizontalebene beweglich. Mit anderen Worten können die Formteile 90, 92, 94, 96 zwischen einer geöffneten Stellung und einer geschlossenen Stellung verfahren werden. Beispielhaft sind die Formteile 90, 94 entlang der X-Richtung verfahrbar. Demgemäß sind die Formteile 92, 96 beispielhaft entlang der Y- Richtung verfahrbar. Die Formteile 90, 92, 94, 96 können aufeinander zu und voneinander weg bewegt werden. Die Formteile 90, 92, 94, 96 sind kreisförmig um die Zentralachse 14 des zu erzeugenden Presslings 10 angeordnet. Die Zentralachse 14 ist parallel zur Z- Richtung.

Die Vorrichtung 80 umfasst ferner eine Stempeleinheit 98, die beispielhaft Stempel 100, 102, 104, 106 umfasst. Die Stempel 100, 102, 104, 106 bilden gemeinsam mit den Formteilen 90, 92, 94, 96 zumindest einen Umfangsbereich (Bezugszeichen 32 in Fig. 1) des Presslings 10 in der Kavität 86 aus.

Insbesondere können die Stempel 100, 102, 104, 106 als seitliche Stempel oder seitliche Stempelteile bezeichnet werden. Mit anderen Worten sind die Stempel 100, 102, 104, 106 nicht - wie üblich - dazu ausgebildet, parallel zur bzw. entlang der Z-Achse verfahren zu werden, um "von oben" oder "von unten" auf das in der Kavität 86 aufgenommene Pulver einzuwirken. Stattdessen sind die Stempel 100, 102, 104, 106 wie die Formteile 90, 92, 94, 96 dazu ausgebildet, parallel zur Horizontalebene, die durch die X-Achse und die Y-Achse definiert ist, bewegt zu werden, um das in der Kavität 86 aufgenommene Pulver unter Druck zu setzen und zu verdichten.

Vorzugsweise sind die Stempel 100, 102, 104, 106 parallel zu den Formteilen 90, 92, 94, 96 bewegbar. Auf diese Weise können die Formteile 90, 92, 94, 96 zumindest abschnittsweise als Führung für die Stempel 100, 102, 104, 106 dienen.

Der Stempel 100 ist dem Formteil 90 zugeordnet. Der Stempel 102 ist dem Formteil 92 zugeordnet. Der Stempel 104 ist dem Formteil 94 zugeordnet. Der Stempel 106 ist dem Formteil 96 zugeordnet.

Im Formteil 90 ist eine Führungsausnehmung 110 für den Stempel 100 ausgebildet. Im Formteil 92 ist eine Führungsausnehmung 112 für den Stempel 102 ausgebildet. Im Formteil 94 ist eine Führungsausnehmung 114 für den Stempel 104 ausgebildet. Im Formteil 96 ist eine Führungsausnehmung 116 für den Stempel 106 ausgebildet.

Es ist zumindest gemäß beispielhaften Ausführungsformen bevorzugt, wenn neben den Stempeln 100, 102, 104, 106, die als seitliche Stempel ausgeführt sind, keine weiteren Stempel, insbesondere keine Vertikalstempel, vorgesehen sind. Mit anderen Worten wurde eine Abkehr von bekannten Prinzipien geschaffen, indem die Stempel nunmehr primär seitlich auf die Kavität 86 zuführbar sind, um den Pressling 10 auszubilden.

Die Kavität weist ferner ein Formunterteil 120 und ein Formoberteil 122 auf. Zur Ausbildung der Ausnehmung 18 sind ferner Schieber 124, 126 vorgesehen. Der Schieber 124 ist dem Formunterteil 120 zugeordnet. Der Schieber 126 ist dem Formoberteil 122 zugeordnet. Die Schieber 124, 126 können auch als Vertikalschieber bezeichnet werden. Die Schieber 124, 126 kontaktieren einander, wenn die Kavität 86 geschlossen ist. Auf diese Weise wird der Bereich in der Kavität 86 blockiert, der später die Ausnehmung 18 im Pressling 10 ausbildet.

Das Formunterteil 120 ist mit einer Führungsausnehmung 128 für den Schieber 124 versehen. Das Formoberteil 122 ist mit einer Führungsausnehmung 130 für den Schieber 126 versehen.

In Fig. 8 sind Bewegungsrichtungen der Formteile 90, 92, 94, 96 sowie der Stempel 100, 102, 104, 106 durch mit 140, 142, 144, 146 bezeichnete Pfeile angedeutet. Die jeweils gepaarten Formteile und Stempel 90, 100; 92, 102; 94, 104 sowie 96, 106 sind jeweils parallel zueinander, aber zumindest teilweise unabhängig voneinander verfahrbar, um die Kavität 86 zu definieren, um das in der Kavität 86 aufgenommene Metallpulver zu verdichten sowie um den sich ergebenden Pressling 10 freizugeben.

In Fig. 8 ist ferner mit 150 schematisch stark vereinfacht eine Halteeinheit 150 dargestellt, die den Formteilen 90, 92, 94 und 96 zugeordnet ist. Ferner ist die Halteeinheit 150 auch dem Formunterteil 120, dem Formoberteil 122 sowie, sofern vorhanden, den Vertikalschiebern 124, 126 zugeordnet. Während des Pressvorgangs sind die Formteile 90, 92, 94, 96, das Formunterteil 120, das Formoberteil 122 sowie die Schieber 124, 126 mit hoher Kraft arretiert bzw. festgehalten. Mit anderen Worten dienen diese Komponenten nicht als Stempel.

Die Vorrichtung 80 weist für die Formteile 90, 92, 94, 96 vier Arretier- bzw. Halteachsen auf. Ferner ist jeweils für das Formunterteil 120 und das Formoberteil 122 eine Arretier- bzw. Halteachse vorgesehen. Gegebenenfalls sind auch für die Vertikalschieber 124, 126 separate Arretier- und Halteachsen vorgesehen. Es ist auch vorstellbar, mit jeweils einer Arretier- oder Halteachse das Formunterteil 120 und den zugeordneten Schieber 124 sowie das Formoberteil 122 und den zugeordneten Schieber 126 anzusteuern.

Ferner weist die Stempeleinheit 98 der Vorrichtung 80 vier Stempelachsen für die Stempel 100, 102, 104, 106 auf, die seitlich auf das in der Kavität 86 aufgenommene Metallpulver einwirken.

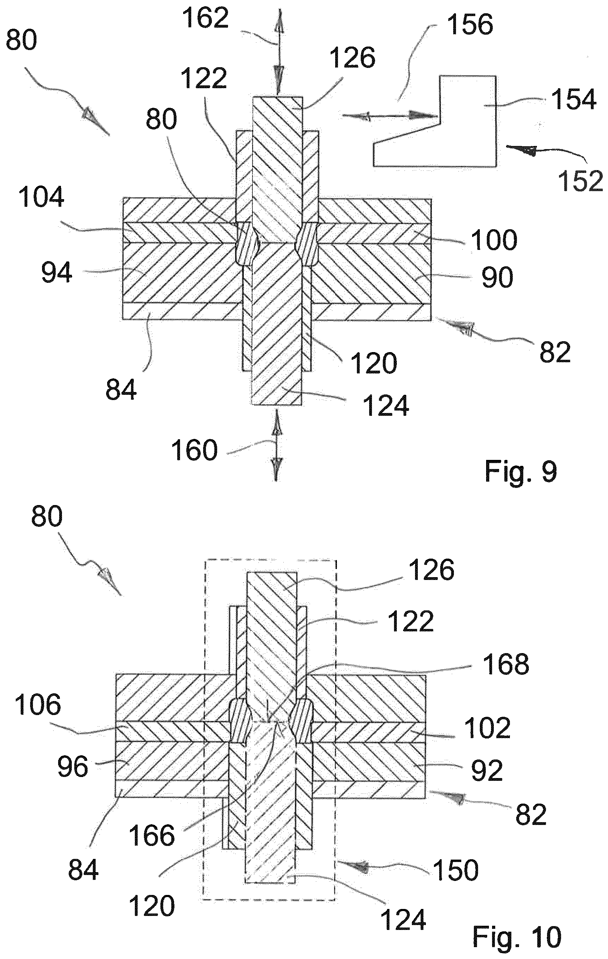

In Fig. 9 ist mit 152 eine Fülleinheit in schematisch stark vereinfachter Form angedeutet. Die Fülleinheit 152 umfasst einen Füllschuh 154, der einer Öffnung der Kavität 86 zuführbar ist, um die Kavität 86 mit dem Hartmetallpulver zu befüllen. Eine beispielhafte Zuführrichtung für den Füllschuh 154 ist in Fig. 9 mit 156 angedeutet. Beispielhaft können das Formoberteil 122 und/oder der dem Formoberteil 122 zugeordnete Schieber 126 zunächst von der Kavität 86 entfernt werden, um den Füllschuh 154 der Fülleinheit 152 zuführen zu können. Sobald die erforderliche Menge des Hartmetallpulvers in die Kavität 86 eingebracht ist, kann der Füllschuh 154 entfernt werden. Danach können das Formoberteil 122 und/oder der Schieber 126 in ihre Schließposition verfahren werden, wodurch die Kavität 86 geschlossen und bereit für den Pressvorgang ist.

In Fig. 9 ist ferner durch einen mit 160 bezeichneten Doppelpfeil eine Bewegungsrichtung des Formunterteils 120 bzw. des unteren Vertikalschiebers 124 angedeutet. Ferner ist durch einen mit 162 bezeichneten Doppelpfeil eine Bewegungsrichtung des Formoberteils 122 bzw. des oberen Vertikalschiebers 126 angedeutet.

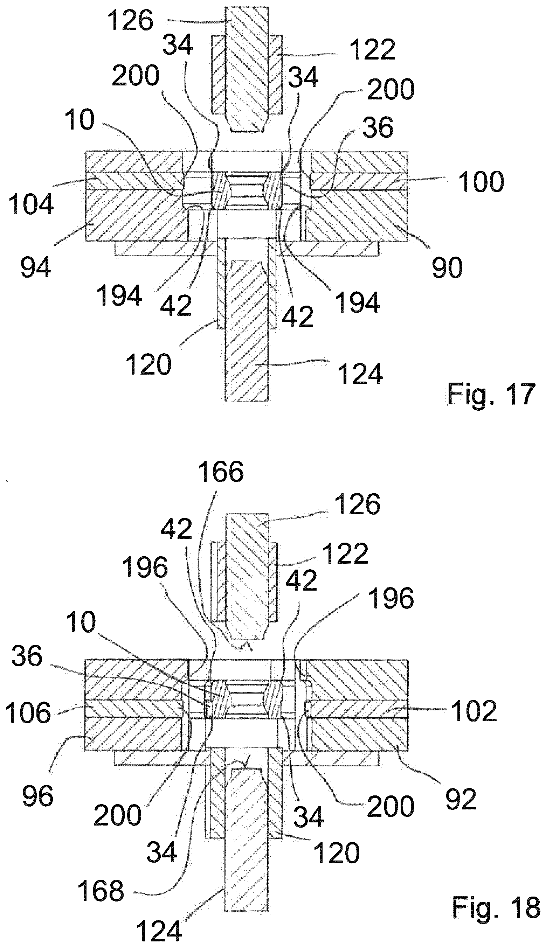

Anhand der Fig. 9 und 10 sowie mit ergänzendem Bezug auf Fig. 17 und 18 wird das Zusammenwirken der Vertikalschieber 124, 126 veranschaulicht. Der Vertikalschieber 126 weist eine Stirnfläche 166 auf. Der Vertikalschieber 124 weist eine Stirnfläche 168 auf. Die Stirnflächen 166, 168 sind beispielhaft jeweils plan gestaltet. Die Stirnflächen 166, 168 können aufeinander dichtend kontaktieren, so dass sich zwischen den Vertikalschieber 124, 126 in der Kavität 86 eine gute Abdichtung ergibt, um die Ausnehmung 18 auszubilden.

Ein Vergleich der Fig. 9 und 10 zeigt, dass die Stempel 100, 104 auf einem anderen Höhenniveau angeordnet sind als die Stempel 102, 106. Mit anderen Worten sind die Stempel 100, 104 gemäß der anhand der Fig. 9 und 10 veranschaulichten beispielhaften Ausgestaltung höher als die Stempel 102, 106 angeordnet. Zur Erläuterung wird erneut auf den anhand der Fig. 1 bis 4 veranschaulichten Pressling 10 verwiesen, der mit einer Mehrzahl von Schneiden 12a, 12b, 12c, 12d versehen ist, wobei die Schneiden 12a und 12b, bezogen auf eine Mittelebene 20, von den Schneiden 12c, 12d abgewandt sind. Da jedoch, wie vorstehend bereits angedeutet, insbesondere die Schneidkanten 34 der Schneiden 12a, 12b, 12c, 12d vorzugsweise durch eine Trennebene der Matrize 82 definiert sind, sind die Stempel 100, 102, 104, 106 jeweils der vertikalen Lage der Schneide 12a, 12b, 12c, 12d zugeordnet, die sie ausformen sollen.

Die vorstehend bereits erwähnten Fig. 7 bis 10 veranschaulichen die Pressvorrichtung 80 in einem ersten Zustand. In dem in den Fig. 7 bis 10 gezeigten Zustand ist die Pressvorrichtung 80 vollständig geschlossen. Dies beinhaltet, dass die Formteile 90, 92, 94, 96, das Formunterteil 120, das Formoberteil 122 sowie die Vertikalschieber 124, 126 in ihrer geschlossenen Stellung angeordnet sind. Ferner befinden sich die Stempel 100, 102, 104, 106 in einer Endposition (Pressposition), in der die gewünschte Formgebung und Verdichtung des in der Kavität 86 aufgenommenen Metallpulvers herbeiführbar ist.

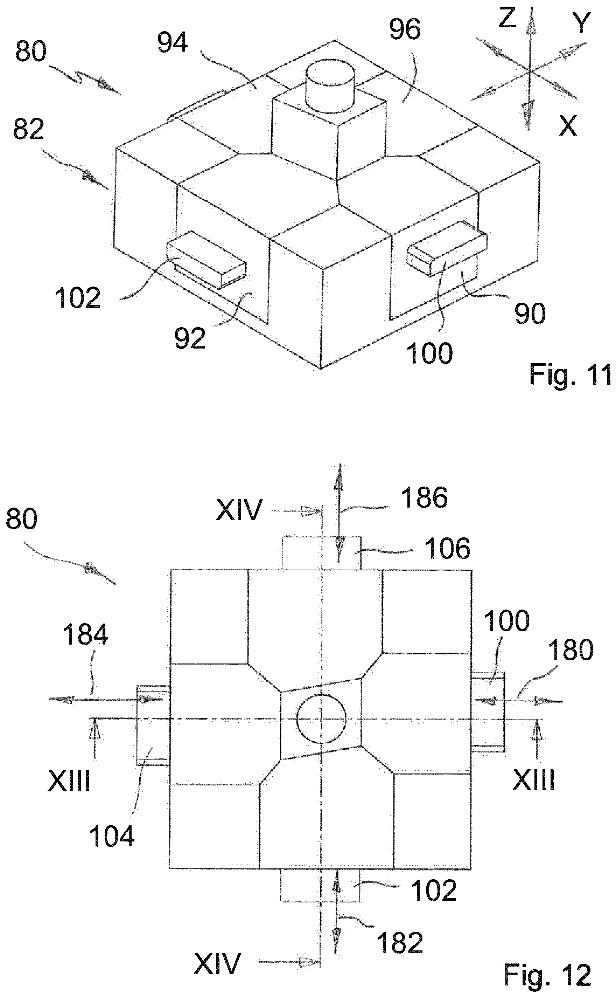

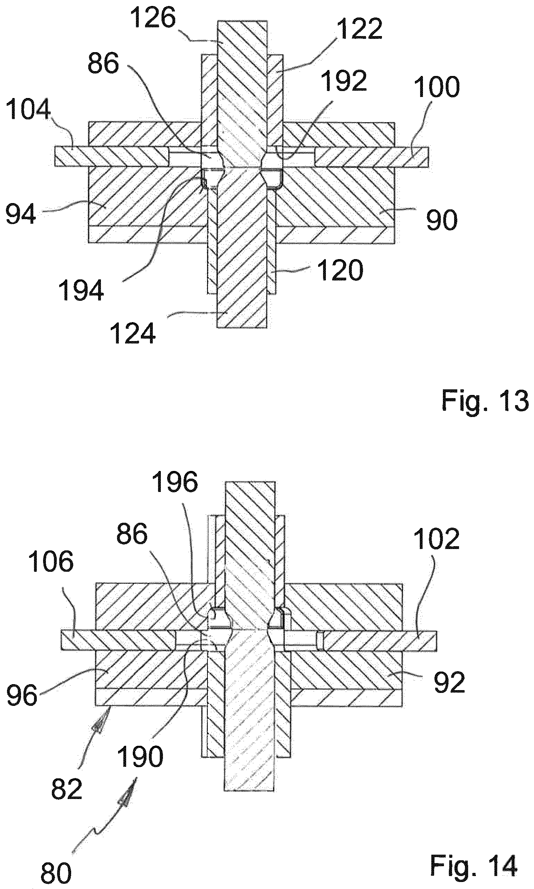

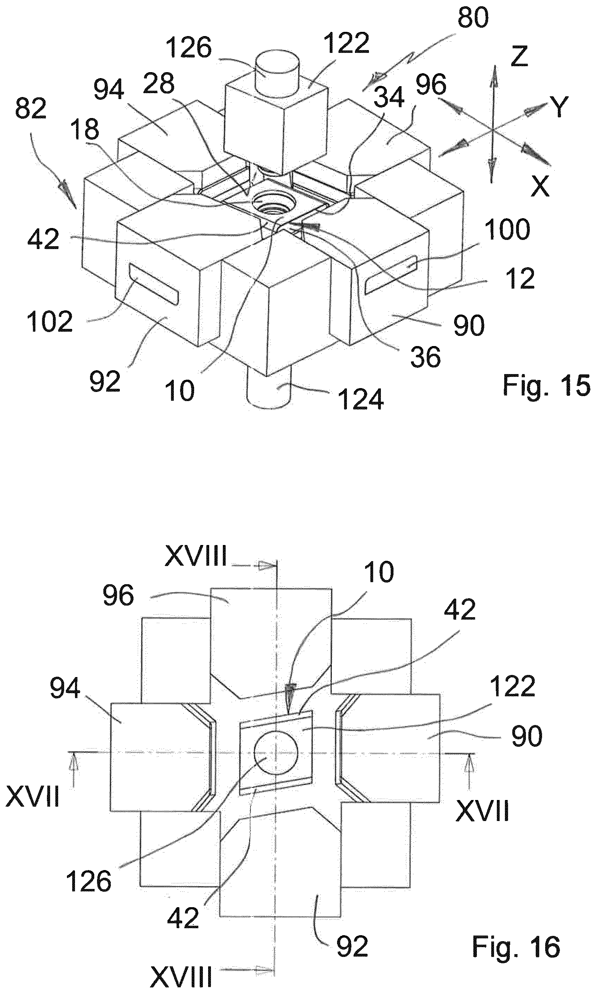

Die Fig. 11 bis 14 sowie die Fig. 15 bis 18 veranschaulichen jeweils die Pressvorrichtung 80 in einem anderen Betriebszustand. Die Ansichtsorientierung in den Fig. 11 und 15 entspricht der Orientierung in Fig. 7. Die Ansichtsorientierung in den Fig. 12 und 16 entspricht der Orientierung in Fig. 8. Die Ansichtsorientierung in den Fig. 13 und 17 entspricht der Orientierung in Fig. 9. Die Ansichtsorientierung in den Fig. 14 und 18 entspricht der Orientierung in Fig. 10.

Die Fig. 11 bis 14 veranschaulichen einen Zustand, in dem die Matrizenteile, also im Wesentlichen die Formteile, in ihrer geschlossenen Stellung angeordnet sind. Bei den Formteilen handelt es sich um diejenigen Teile, die nicht als Stempelteile dienen. Die Formteile umfassen die seitlichen Formteile 90, 92, 94, 96, das Formunterteil 120, das Formoberteil 122 sowie, sofern vorhanden, die vertikalen Schieber 124, 126.

Die Formteile definieren denjenigen Teil der Kavität 86, der während des eigentlichen Pressvorgangs nicht bewegt wird. Somit veranschaulichen insbesondere die in den Fig. 13 und 14 gezeigten Schnittansichten die Kavität in einer Füllposition zur Aufnahme des unverpressten Metallpulvers, wobei aus Veranschaulichungsgründen auf eine Darstellung des Metallpulvers verzichtet wurde. Die Ansichtsorientierung in Fig. 13 folgt der Linie XIII-XIII in Fig. 12. Die Ansichtsorientierung in Fig. 14 folgt der Linie XIV-XIV in Fig. 12.

In Fig. 12 ist durch mit 180, 182, 184, 186 bezeichnete Doppelpfeile jeweils eine Pressrichtung oder Pressachse der Stempel 100, 102, 104, 106 angedeutet. Die Stempel 100, 104 sind parallel zur X-Achse bewegbar. Die Stempel 102, 106 sind parallel zur Y-Achse bewegbar. Das Verdichten des Hartmetallpulvers, das mit der Fülleinheit 152 (Fig. 9) in die Kavität 86 eingebracht wird, wird durch die Bewegung der Stempel 100, 102, 104, 106 in gewünschter Weise verdichtet und in Form gebracht.

Mit erneuter Bezugnahme auf die Fig. 13 und 14 wird die Gestaltung der Kavität 86 näher veranschaulicht. Eine Unterseite 190 (Fig. 14) der Kavität 86 wird zumindest teilweise durch das Formunterteil 120 und, sofern vorhanden, den Vertikalschieber 124 ausgebildet. Eine Oberseite 192 (Fig. 13) wird zumindest teilweise durch das Formoberteil 122 und, sofern vorhanden, durch den Schieber 126 definiert.

Beim Pressling 10 entsprechen die Unterseite 190 und die Oberseite 192 im Wesentlichen der unteren Grundfläche 30 und der oberen Grundfläche 28.

Wie vorstehend bereits dargelegt, sind am Pressling 10 zwischen den Grundflächen 28, 30 und dem Umfangsbereich 32 Übergänge 42 ausgebildet. Die Übergänge 42 sind an den (vier) Seiten des Umfangsbereichs 32 jeweils der Grundfläche 28, 30 zugeordnet, der keine Schneide 12 zugeordnet ist. Die Übergänge 42 sind zumindest teilweise mit Radien und/oder Fasen versehen. Insbesondere Fasen, Radien mit tangentialem Auslauf und ähnliche Konturen am Pressling 10 werden in der Matrize 82 vorzugsweise durch Formteile definiert, die zu diesem Zweck keine übermäßige Verjüngung aufweisen müssen.

In diesem Zusammenhang wird auf einen mit 194 bezeichneten unteren Überstand des Formteils 94 in Fig. 13 sowie auf einen mit 196 bezeichneten oberen Überstand des Formteils 96 in Fig. 14 verwiesen.

Die Überstände 194, 196 bilden jeweils einen Teilabschnitt am Rand der Unterseite 190 bzw. Oberseite 192 der Kavität 86 aus. Somit erlauben die Überstände 194, 196 beim Pressling 10 Übergänge 42 mit Radien, Fasen, tangentialen Verläufen und dergleichen.

In diesem Zusammenhang ist anzumerken, dass mit den mit entsprechenden Überständen 194, 196 zur Ausbildung der Übergänge 42 versehenen seitlichen Formteile 90, 92, 94, 96 vorzugsweise kein vertikal wirksamer Stempel gekoppelt ist. Wären beispielsweise das Formunterteil 120 und/oder das Formoberteil 122 in der in den Fig. 13 und 14 veranschaulichten Ausgestaltung als aktive Stempel ausgeführt, würde sich ein ungünstiger Druckverlauf bzw. Gefügeverlauf beim Pressen ergeben. Diejenigen Bereiche der Kavität 86, die durch die Überstände 194, 196 definiert sind, wären außerhalb des Wirkbereichs solcher vertikaler Stempel positioniert. Dies würde dazu führen, dass gerade die Übergänge 42 des Presslings 10 keine ausreichende Festigkeit aufweisen würden. Im Pressling 10 würde sich ein ungünstiger bzw. unstetiger Gefügeverlauf ergeben.

In diesem Zusammenhang wird angemerkt, dass es von Vorteil ist, wenn die Stempel 100, 104 sowie 102, 106 auf verschiedenen Vertikalebenen angeordnet sind. Der vertikale Versatz zwischen den einander jeweils gegenüberliegenden Stempelpaaren 100, 104 sowie 102, 106 erlaubt eine gleichmäßige Verdichtung des Hartmetallpulvers. Mit anderen Worten wird das Pulver, das in der Kavität 86 im Bereich der unteren Überstände 194 der Formteile 90, 94 angeordnet ist, durch die Stempel 102, 106 verdichtet. Ferner wird das Pulver, das im Bereich der oberen Überstände 196 der Formteile 92, 96 angeordnet ist, durch die Stempel 100, 104 verdichtet. Die Stempel 100, 104 sowie 102, 106 bilden sich kreuzende, aber voneinander beabstandete Pressachsenpaare 180, 184 sowie 182, 186.

Ergänzend wird auf den anhand der Fig. 15 bis 18 veranschaulichten Zustand der Pressvorrichtung 80 verwiesen. In den Fig. 15 bis 18 ist die Kavität 86 geöffnet, so dass der Pressling 10 entnehmbar ist. Aus Veranschaulichungsgründen ist der Pressling 10 in den Fig. 15 bis 18 in einem "Schwebezustand" gezeigt, also in der ursprünglich durch die Kavität 86 im geschlossenen Zustand definierten Position und Orientierung.

Die in Fig. 15 gezeigte perspektivische Darstellung veranschaulicht beim Pressling 10 beispielhaft eine Schneide 12, die der (oberen) Grundfläche 28 zugeordnet ist, wobei die Schneide 12 zumindest teilweise durch den Stempel 100 ausgebildet wird, der mit dem Formteil 90 zusammenwirkt. Ferner ist in Fig. 15 mit 42 ein Übergang zwischen der Grundfläche 28 und einem Umfangsbereich 32 des Presslings 10 angedeutet, der durch einen Überstand 196 im Formteil 92 erzeugt wird, vgl. Fig. 18.

Die in Fig. 16 veranschaulichte Draufsicht lässt erkennen, dass das Formoberteil 122, das aus Betrachtersicht vor dem Pressling 10 angeordnet ist, den Pressling 10 nicht vollständig abdeckt. Die Übergänge 42, die eben nicht durch das Formoberteil 122 ausgebildet werden, schauen unter dem Formoberteil 122 hervor.

Anhand der Fig. 7 bis 18 lässt sich erkennen, dass in dem veranschaulichten beispielhaften Ausführungsbeispiel die Kavität 86 vollständig durch bewegliche Teile gebildet wird, wobei es sich um Stempelteile und um Formteile handelt.

In den Fig. 17 und 18 sind frontale Formgebungsabschnitte 200 der Stempel 100, 102, 104, 106 dargestellt, die jeweils einer Schneide 12 des Presslings 10 zugeordnet sind. Die Formgebungsabschnitte 200 sind als Projektion oder Vorsprung am jeweiligen frontalen Ende des Stempels 100, 102, 104, 106 ausgebildet, das dem Zentrum der Kavität 86 zugewandt ist. Die Formgebungsabschnitte 200 bilden jeweils die muldenartige Spanfläche 36 der Schneide 12 aus. Am Übergang zwischen den Formgebungsabschnitten 200 der Stempel 100, 102, 104, 106 und der diesen zugeordneten Formteile 90, 92, 94, 96 wird im entstehenden Pressling 10 jeweils die Schneidkante 34 ausgeformt.

Der in Fig. 17 dargestellte Querschnitt zeigt obere Schneidkanten 34, die der oberen Grundfläche 28 des Presslings zugeordnet sind. Der in Fig. 18 gezeigte Schnitt zeigt untere Schneidkanten 34, die der unteren Grundfläche 30 des Presslings 10 zugeordnet sind. Die Freiflächen 38, die den jeweiligen Schneiden 12 zugeordnet sind (vgl. wiederum Fig. 1 bis Fig. 4) können durch das Formunterteil 120 und das Formoberteil 122 definiert werden. Die Freiflächen 38 weisen im Regelfall nur eine geringe Neigung gegenüber der Horizontalebene auf, so dass die entsprechende Gestalt beim Formunterteil 120 und beim Formoberteil 122 ohne übermäßige Wandstärkenreduzierung bzw. ohne übermäßig spitze Ausläufe realisierbar ist.

Wesentlich für die Herstellung des Presslings 10 in der Pressvorrichtung 80 ist, dass auf vertikale Pressachsen verzichtet wird. Die Hauptpressachsen sind seitliche bzw. horizontale Pressachsen 180, 182, 184, 186, vgl. Fig. 12. Auf diese Weise kann die spezielle symmetrische Gestaltung des Presslings 10 zumindest endkonturnah durch Hartmetallpressen erzeugt werden. Dies erlaubt eine deutliche Reduzierung des Nachbearbeitungsaufwands.

Das anhand der Fig. 6 bis 18 veranschaulichte Konzept ermöglicht eine höhere Gestaltungsfreiheit und gestattet eine einsatzgerechte Auslegung der Gestaltung der Presslinge 10 und der darauf basierenden Schneideinsätze 66 (Fig. 5).

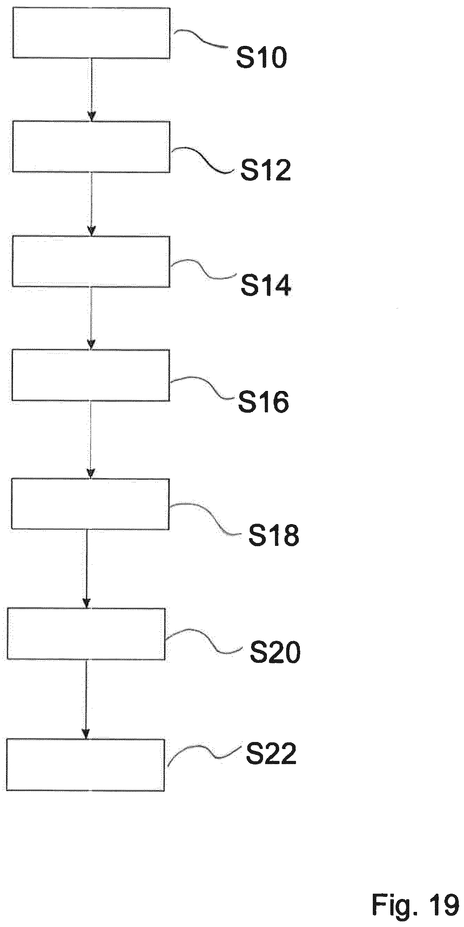

Mit Bezug auf Fig. 19 wird anhand eines schematischen Blockdiagramms eine beispielhafte Ausgestaltung eines Verfahrens zur Herstellung von Hartmetallpresslingen veranschaulicht. Die gemäß dem Verfahren erzeugbaren Presslinge können zur Herstellung von Schneideinsätzen, insbesondere zur Herstellung von Wendeschneidplatten komplexer Geometrien, genutzt werden. Vorzugsweise erlaubt das Verfahren die Herstellung von Presslingen mit geringem Nachbearbeitungsaufwand, insbesondere mit geringem Zerspanungsaufwand.

Das Verfahren umfasst einen Schritt S10, der die Bereitstellung einer mehrteiligen Matrize beinhaltet. Es folgt ein mit S12 bezeichneter Schritt, der ein zumindest teilweises Formen einer Kavität in der Matrize zum Inhalt hat. Vorzugsweise wird die Kavität durch eine Mehrzahl beweglicher Formteile gebildet. Insbesondere kann der Schritt S12 ein Zuführen mehrerer Formteile und ggf. eines Formunterteils umfassen. Nach dem Schritt S12 ist die Kavität noch nicht vollständig geschlossen.

Es schließt sich ein Schritt S14 an, der ein Füllen der Kavität mit einem Hartmetallpulver umfasst. Dies kann insbesondere mit einem Füllschuh erfolgen, der einer Öffnung der Kavität von oben zuführbar ist. Auf diese Weise kann das Hartmetallpulver Schwerkraft-unterstützt in die Kavität einrieseln. Wenn die Kavität hinreichend befüllt ist, wird der Füllschuh von der Öffnung der Kavität weg bewegt.

Es folgt ein Schritt S16, der ein Schließen der Kavität durch Zuführen eines Formoberteils umfasst. Es kann von Vorteil sein, wenn sich die seitlichen Stempel ein Stück weit nach außen bewegen, wenn die Kavität durch das Formoberteil geschlossen wird. Auf diese Weise wird das Befüllen der Kavität in Richtung der seitlichen (waagrechten) Teilbereiche der Kavität unterstützt. Das Zurückfahren der seitlichen Stempel kann einen Unterdruck erzeugen, der zu einem Saugeffekt bzw. Nachsaugeffekt führt.

Durch das Formoberteil, das Formunterteil und die seitlichen Formteile wird ein Großteil der Kavität definiert. Die Schritte S12 und S16 können auch ein Zuführen von Schiebern, insbesondere von Vertikalschiebern, umfassen. Vorzugsweise sind die Schieber mit dem Formunterteil und/oder dem Formoberteil gekoppelt. Die Schieber können genutzt werden, um Bohrungen bzw. Ausnehmungen im sich ergebenden Pressling zu definieren.

Ein weiterer Schritt S18 umfasst ein Festhalten der beweglichen Matrizenteile. Insbesondere die Formteile, das Formunterteil, das Formoberteil und, sofern vorhanden, die Schieber können formschlüssig und/oder kraftschlüssig verriegelt werden, um den Pressdrücken standzuhalten und um den Pressling mit der gewünschten Genauigkeit zu erzeugen.

Ein mit S20 bezeichneter Schritt beschreibt den eigentlichen Pressvorgang. Das Verdichten des Hartmetallpulvers erfolgt primär durch seitliche Stempel. Die seitlichen Stempel sind seitlich auf die Kavität zuführbar, um das Pulver zu verdichten. Vorzugsweise sind die seitlichen Stempel mit den seitlichen Formteilen gekoppelt. Dies kann beispielsweise gemeinsame Führungsflächen bzw. Führungsausnehmungen umfassen. Mit anderen Worten können beispielhaft zumindest einige der seitlichen Formteile eine Führung für jeweils einen seitlichen Schieber bereitstellen. Auf diese Weise kann die Matrize besonders kompakt gestaltet sein.

Auf den Pressschritt S20 folgt ein Schritt S22, der ein Öffnen der Kavität beinhaltet. Die seitlichen Stempel und die beweglichen Matrizenteile, gegebenenfalls inklusive vertikal verfahrbarer Werkzeugteile (beispielsweise Formoberteil bzw. Formunterteil mit Schiebern), werden in eine geöffnete Stellung verfahren, um eine Entnahme des Presslings zu ermöglichen.

Es können sich weitere Schritte anschließen, insbesondere ein Nachbearbeitungsschritt und/oder ein Handling-Schritt. Auf diese Weise kann der Pressling in die gewünschte Form gebracht werden. Der Pressling kann einer Sinteranlage zugeführt werden, um auf Basis des Presslings durch Sintern ein Schneidwerkzeug, insbesondere einen Schneideinsatz oder eine Schneidplatte, zu erzeugen.

## Patentansprüche

1. Verfahren zur endkonturnahen Herstellung von Hartmetallpresslingen, insbesondere zur Herstellung von Sinterrohlingen für Schneidwerkzeuge (66), umfassend die folgenden Schritte:
- Bereitstellung einer mehrteiligen Matrize (82), die an einem Bett (84) aufgenommen ist und die eine Mehrzahl seitlicher Formteile (90, 92, 94, 96) umfasst, die Seitenflächen einer Kavität (86) für einen Pressling (10) definieren,
wobei zumindest ein seitliches Formteil (90, 92, 94, 96) ferner einen Abschnitt einer Oberseite (192) der Kavität (86) definiert,
- Zuführen der seitlichen Formteile (90, 92, 94, 96), umfassend eine Bewegung der seitlichen Formteile (90, 92, 94, 96) parallel zu einer ersten Ebene, die eine Horizontalebene ist,
- Zuführen zumindest zweier seitlicher Stempelteile (100, 102, 104, 106), umfassend eine Bewegung der Stempelteile (100, 102, 104, 106) parallel zu der ersten Ebene, die eine Horizontalebene ist,
wobei zumindest zwei seitliche Formteile (90, 92, 94, 96) mit einer Führungsausnehmung (110, 112, 114, 116) für ein seitliches Stempelteil (100, 102, 104, 106) versehen sind, das entlang der Führungsausnehmung (110, 112, 114, 116) verfahrbar ist,
- Zuführen einer Fülleinheit (152) über eine Öffnung der Kavität (86) und Befüllen der Kavität (86) mit einem Hartmetallpulver,
- Zuführen zumindest eines Formoberteils (122), das einen Abschnitt der Oberseite (192) der Kavität (86) definiert, umfassend eine Bewegung des Formoberteils (122) parallel zu einer zweiten Ebene, die eine Vertikalebene ist,
- Festhalten der seitlichen Formteile (90, 92, 94, 96) und des Formoberteils (122),
- Verdichten des Pulvers mit den zumindest zwei seitlichen Stempelteilen (100, 102, 104, 106), und
- Öffnen der seitlichen Formteile (90, 92, 94, 96), des Formoberteils (122) und der Stempelteile (100, 102, 104, 106) zum Entformen des Presslings (10),
wobei die Kavität (86) über die Oberseite (192) Schwerkraft-unterstützt mit dem Hartmetallpulver befüllt wird.

2. Verfahren nach Anspruch 1, ferner aufweisend:
- Bereitstellung zumindest eines seitlichen Formteils (90, 92, 94, 96), das ferner einen Abschnitt einer Unterseite (190) der Kavität (86) definiert,
- Zuführen zumindest eines Formunterteils (120), das einen Abschnitt einer Unterseite (190) der Kavität (86) definiert, und
- Festhalten des Formunterteils (120) gemeinsam mit dem Festhalten der seitlichen Formteile (90, 92, 94, 96) und des Formoberteils (122).

3. Verfahren nach Anspruch 1 oder 2, wobei die seitlichen Formteile (90, 92, 94, 96), das Formoberteil (122) und insbesondere auch das Formunterteil (120) während des Verdichtens fixiert sind, und wobei die seitlichen Stempelteile (100, 102, 104, 106) zum Verdichten des Pulvers bewegt werden.

4. Verfahren nach einem der vorhergehenden Ansprüche, wobei das Verdichten ein seitliches Verdichten durch die Stempelteile (100, 102, 104, 106) umfasst, wobei eine jeweilige Bewegungsrichtung der Stempelteile (100, 102, 104, 106) parallel zu einer Ebene orientiert ist, die schräg, insbesondere senkrecht, zu einer Zuführrichtung des Formoberteils (122) orientiert ist, und/oder wobei das Verdichten des Pulvers im Wesentlichen, vorzugsweise ausschließlich, durch die seitlichen Stempelteile (100, 102, 104, 106) erfolgt.

5. Verfahren nach einem der vorhergehenden Ansprüche, wobei der Schritt des Zuführens der seitlichen Formteile (90, 92, 94, 96) ein Zuführen von drei oder mehr seitlichen Formteilen (90, 92, 94, 96) umfasst, die aufeinander zu und voneinander weg bewegbar sind, um die Kavität (86) zu öffnen oder zu schließen wobei vorzugsweise die seitlichen Formteile (90, 92, 94, 96) gemeinsam eine horizontale Begrenzung für den Pressling (10) definieren.

6. Verfahren nach einem der vorhergehenden Ansprüche, wobei die Kavität (86) und eine sich ergebende Gestalt des Presslings (10) vollständig durch bewegliche Matrizenteile (90, 92, 94, 96, 120, 122, 124, 126) und Stempelteile (100, 102, 104, 106) definiert werden, und/oder wobei zumindest eine obere oder untere Grundfläche (28, 30), vorzugweise beide Grundflächen (28, 30), des Presslings (10) in der Kavität (86) stempellos erzeugt wird, und/oder wobei jedem seitlichen Formteil (90, 92, 94, 96) ein Stempelteil (100, 102, 104, 106) zugeordnet ist, das in der Führungsausnehmung (110, 112, 114, 116) angeordnet ist, und wobei eine Bewegungsrichtung des Stempelteils (100, 102, 104, 106) parallel zur Bewegungsrichtung des seitlichen Formteils (90, 92, 94, 96) ist.

7. Verfahren nach einem der vorhergehenden Ansprüche, wobei zumindest zwei Stempelteile (100, 102, 104, 106), insbesondere zwei Paare von Stempelteilen (100, 102, 104, 106), vertikal zueinander versetzt sind, und/oder wobei die Stempelteile (100, 102, 104, 106) Abschnitte der Gestalt des Presslings (10) ausbilden, die nicht vertikal entformbar sind.

8. Verfahren nach einem der vorhergehenden Ansprüche, wobei zur Ausbildung eines Presslings (10) für eine Wendeschneidplatte (66) mit rhombischer Form vier seitliche Formteile (90, 92, 94, 96) vorgesehen sind, die zumindest abschnittsweise vier Seiten des Presslings (10) definieren und mit vier seitlichen Stempelteilen (100, 102, 104, 106) gekoppelt sind, die vier Spanflächen (36) in vier Umfangsseiten des Presslings (10) definieren, wobei ein Formoberteil (122) zur Ausbildung einer oberen Grundfläche (28) und ein Formunterteil (120) zur Ausbildung einer unteren Grundfläche (30) vorgesehen sind, die mit einem oberen Vertikalschieber (126) und einem unteren Vertikalschieber (124) gekoppelt sind, die einander kontaktieren, wobei der obere Vertikalschieber (126) und der untere Vertikalschieber (124) gemeinsam eine Durchgangsöffnung (18) am Pressling (10) ausbilden.

9. Verfahren zur Herstellung von Hartmetall-Schneidwerkzeugen, insbesondere von Schneideinsätzen, umfassend:
- Herstellung eines Presslings (10) gemäß einen der Ansprüche 1 bis 8,
- nachbearbeitungsarmes oder nachbearbeitungsfreies Teile-Handling, insbesondere Transfer von einer Pressanlage zu einer Sinteranlage, und
- Sintern der Presslinge (10).

10. Vorrichtung (80) zur endkonturnahen Herstellung von Hartmetallpresslingen (10), insbesondere zur Herstellung von Sinterrohlingen für Schneidwerkzeuge (66), mit
- einem Bett (84),
- einer am Bett (84) aufgenommenen mehrteiligen Matrize (82) zur Ausbildung einer Kavität (86) für einen Pressling (10), die eine Mehrzahl seitlicher Formteile (90, 92, 94, 96) umfasst, die Seitenflächen der Kavität (86) definieren, wobei zumindest ein seitliches Formteil (90, 92, 94, 96) ferner einen Abschnitt einer Oberseite (192) der Kavität (86) definiert, wobei die seitlichen Formteile (90, 92, 94, 96) parallel zu einer ersten Ebene bewegbar sind, um die seitlichen Formteile (90, 92, 94, 96) zuzuführen, wobei die erste Ebene eine Horizontalebene ist,
- einem Formoberteil (122), das einen Abschnitt der Oberseite (192) der Kavität (86) definiert, wobei das Formoberteil (122) parallel zu einer zweiten Ebene bewegbar ist, um das Formoberteil (122) zuzuführen, wobei die zweite Ebene eine Vertikalebene ist,
- einer Stempeleinheit (98) mit zumindest zwei seitlichen Stempelteilen (100, 102, 104, 106), wobei zumindest zwei seitliche Formteile (90, 92, 94, 96) mit einer Führungsausnehmung (110, 112, 114, 116) für jeweils ein seitliches Stempelteil (100, 102, 104, 106) versehen sind, wobei die seitlichen Stempelteile (100, 102, 104, 106) parallel zu der ersten Ebene bewegbar sind, um die seitlichen Stempelteile (100, 102, 104, 106) zuzuführen, wobei die erste Ebene eine Horizontalebene ist, und
- einer Fülleinheit (152) mit einem Füllschuh (154), der einer Öffnung der Kavität (86) zuführbar ist, um die Kavität (86) mit einem Hartmetallpulver zu befüllen, wobei die seitlichen Formteile (90, 92, 94, 96) und das Formoberteil (122) zwischen einer geöffneten Stellung und einer Schließstellung verfahrbar sind, wobei die seitlichen Formteile (90, 92, 94, 96) und das Formoberteil (122) in der Schließstellung Flächen des Presslings (10) definieren,
wobei die seitlichen Stempelteile (100, 102, 104, 106) entlang der Führungsausnehmungen (110, 112, 114, 116) in den seitlichen Formteilen (90, 92, 94, 96) verfahrbar sind, um das Pulver zu verdichten,
wobei eine Bewegungsrichtung der Stempelteile (100, 102, 104, 106) parallel zu einer Ebene orientiert ist, die senkrecht zu einer Zuführrichtung des Formoberteils (122) orientiert ist, und
wobei die Kavität (86) über die Oberseite (192) mit dem Hartmetallpulver Schwerkraft-unterstützt befüllbar ist.

11. Vorrichtung nach Anspruch 10, ferner aufweisend ein Formunterteil (120), das einen Abschnitt einer Unterseite der Kavität (86) definiert, wobei zumindest ein seitliches Formteil (90, 92, 94, 96) ferner einen Abschnitt einer Unterseite (190) der Kavität (86) definiert, und wobei die seitlichen Formteile (90, 92, 94, 96), das Formoberteil (122) und das Formunterteil (120) in der Schließstellung fixierbar sind, vorzugsweise durch eine Halteeinheit (150), die die seitlichen Formteile (90, 92, 94, 96), das Formoberteil (122) und das Formunterteil (120) in der geschlossenen Stellung fixiert, um einen Umfangsbereich (32) des Presslings (10) auszubilden.

12. Vorrichtung nach Anspruch 10 oder 11, wobei das Formoberteil (122) mit einem Vertikalschieber (126) gekoppelt ist, der zum Formen einer Ausnehmung (18) im Pressling (10) ausgebildet ist, insbesondere einer den Pressling (10) vertikal durchragenden Ausnehmung (18), wobei der Vertikalschieber (126) parallel zum Formoberteil (122) bewegbar ist, und wobei insbesondere auch das Formunterteil (120) mit einem korrespondierenden Vertikalschieber (124) gekoppelt ist.

13. Verfahren nach einem der Ansprüche 2 oder 3 bis 8, sofern auf Anspruch 2 rückbezogen, wobei auch das Formunterteil (120) parallel zur zweiten Ebene bewegt wird.

14. Verfahren nach einem der Ansprüche 1 bis 8, wobei das Formoberteil (122) mit einem Vertikalschieber (126) gekoppelt ist, der eine Ausnehmung (18) im Pressling (10) ausbildet, insbesondere eine den Pressling (10) vertikal durchragende Ausnehmung (18), wobei der Vertikalschieber (126) parallel zum Formoberteil (122) bewegt wird, und wobei insbesondere auch das Formunterteil (120) mit einem korrespondierenden Vertikalschieber (124) gekoppelt ist.

15. Verfahren nach einem der Ansprüche 1 bis 8, wobei die seitlichen Formteile (90, 92, 94, 96) einen Übergang (42) zwischen einem Umfangsbereich (32) und zumindest einer oberen oder unteren Grundfläche (28, 30) des Presslings (10) ausbilden, wobei der Übergang (42) insbesondere einen Radius oder eine Fase umfasst.

## Claims

1. A method for the near-net-shape manufacture of hard-metal pressed articles, in particular for the manufacture of sinter raw parts for cutting tools (66), comprising the following steps:
- providing a multi-part die (82), which is accommodated on a bed (84) and which comprises a plurality of lateral mold parts (90, 92, 94, 96) defining lateral surfaces of a cavity (86) for a pressed article (10), wherein at least one lateral mold part (90, 92, 94, 96) further defines a portion of an upper side (192) of the cavity (86),
- feeding the lateral mold parts (90, 92, 94, 96), comprising a movement of the lateral mold parts (90, 92, 94, 96) parallel to a first plane, which is a horizontal plane,
- feeding at least two lateral punch parts (100, 102, 104, 106), comprising a movement of the punch parts (100, 102, 104, 106) parallel to the first plane, which is a horizontal plane, wherein at least two lateral mold parts (90, 92, 94, 96) are provided with a guide recess (110, 112, 114, 116) for a lateral punch part (100, 102, 104, 106) which is displaceable along the guide recess (110, 112, 114, 116),
- feeding a filling unit (152) above an opening of the cavity (86) and filling the cavity (86) with a hard-metal powder,
- feeding at least one upper mold part (122), which defines a portion of the upper side (192) of the cavity (86), comprising a movement of the upper mold part (122) parallel to a second plane, which is a vertical plane,
- firmly holding the lateral mold parts (90, 92, 94, 96) and the upper mold part (122),
- compressing the powder with the at least two lateral punch parts (100, 102, 104, 106), and
- opening the lateral mold parts (90, 92, 94, 96), the upper mold part (122) and the punch parts (100, 102, 104, 106) for demolding the pressed article (10),
wherein the cavity (86) is filled with the hard-metal powder via the upper side (192) with the aid of gravity.

2. The method as claimed in claim 1, further comprising:
- providing at least one lateral mold part (90, 92, 94, 96), which further defines a portion of a lower side (190) of the cavity (86),
- feeding at least one lower mold part (120), which defines a portion of a lower side (190) of the cavity (86), and
- firmly holding the lower mold part (120) together with the firmly holding of the lateral mold parts (90, 92, 94, 96) and the upper mold part (122).

3. The method as claimed in claim 1 or 2, wherein the lateral mold parts (90, 92, 94, 96), the upper mold part (122) and in particular also the lower mold part (120) are fixed during the compressing, and wherein the lateral punch parts (100, 102, 104, 106) are moved for compressing the powder.

4. The method as claimed in any one of the preceding claims, wherein the compressing comprises a lateral compression by the punch parts (100, 102, 104, 106), wherein a respective direction of movement of the punch parts (100, 102, 104, 106) is oriented parallel to a plane that is oriented obliquely, in particular perpendicularly, to a feed direction of the upper mold part (122), and/or wherein the compressing of the powder is effected substantially, preferably exclusively, by the lateral punch parts (100, 102, 104, 106).

5. The method as claimed in any one of the preceding claims, wherein the step of feeding the lateral mold parts (90, 92, 94, 96) comprises feeding three or more lateral mold parts (90, 92, 94, 96) that are movable toward and away from each other to open or close the cavity (86), wherein preferably the lateral mold parts (90, 92, 94, 96) together define a horizontal boundary for the pressed article (10).

6. The method as claimed in any one of the preceding claims, wherein the cavity (86) and a resulting shape of the pressed article (10) are entirely defined by movable die parts (90, 92, 94, 96, 120, 122, 124, 126) and punch parts (100, 102, 104, 106), and/or wherein at least one upper or lower base area (28, 30), preferably both base areas (28, 30), of the pressed article (10) in the cavity (86) is formed punch-less, and/or wherein each lateral mold part (90, 92, 94, 96) is associated with a punch part (100, 102, 104, 106) that is arranged in the guide recess (110, 112, 114, 116), and wherein a direction of movement of the punch part (100, 102, 104, 106) is parallel to the direction of movement of the lateral mold part (90, 92, 94, 96).

7. The method as claimed in any one of the preceding claims, wherein at least two punch parts (100, 102, 104, 106), in particular two pairs of punch parts (100, 102, 104, 106), are vertically offset from each other, and/or wherein the punch parts (100, 102, 104, 106) form portions of the shape of the pressed article (10) that are not vertically demoldable.

8. The method as claimed in any one of the preceding claims, wherein, for forming a pressed article (10) for an indexable insert (66) of rhombic shape, four lateral mold parts (90, 92, 94, 96) are provided, which define, at least sectionally, four sides of the pressed article (10) and are coupled to four lateral punch parts (100, 102, 104, 106) which define four rake faces (36) in four circumferential sides of the pressed article (10), wherein an upper mold part (122) for forming an upper base area (28) and a lower mold part (120) for forming a lower base area (30) are provided, which are coupled to an upper vertical slider (126) and a lower vertical slider (124) that contact each other, wherein the upper vertical slider (126) and the lower vertical slider (124) together form a through opening (18) on the pressed article (10).

9. A method for the manufacture of hard-metal cutting tools, in particular of cutting inserts, comprising:
- manufacturing a pressed article (10) according to any one of claims 1 to 8,
- parts handling with only little post-processing or without post-processing, in particular transfer from a pressing plant to a sintering plant, and
- sintering the pressed articles (10).

10. A device (80) for the near-net-shape manufacture of hard-metal pressed articles (10), in particular for the manufacture of sinter raw parts for cutting tools (66), comprising:
- a bed (84),
- a multi-part die (82) accommodated on the bed (84) for forming a cavity (86) for a pressed article (10), which comprises a plurality of lateral mold parts (90, 92, 94, 96) defining lateral surfaces of the cavity (86), wherein at least one lateral mold part (90, 92, 94, 96) further defines a portion of an upper side (192) of the cavity (86), wherein the lateral mold parts (90, 92, 94, 96) are movable parallel to a first plane in order to feed the lateral mold parts (90, 92, 94, 96), wherein the first plane is a horizontal plane,
- an upper mold part (122), which defines a portion of the upper side (192) of the cavity (86), wherein the upper mold part (122) is movable parallel to a second plane in order to feed the upper mold part (122), wherein the second plane is a vertical plane,
- a punch unit (98) comprising at least two lateral punch parts (100, 102, 104, 106), wherein at least two lateral mold parts (90, 92, 94, 96) are respectively provided with a guide recess (110, 112, 114, 116) for respectively one lateral punch part (100, 102, 104, 106), wherein the lateral punch parts (100, 102, 104, 106) are movable parallel to the first plane in order to feed the lateral punch parts (100, 102, 104, 106), wherein the first plane is a horizontal plane, and
- a filling unit (152) comprising a filling shoe (154) that is feedable to an opening of the cavity (86) in order to fill the cavity (86) with a hard-metal powder,
wherein the lateral mold parts (90, 92, 94, 96) and the upper mold part (122) are movable between an open position and a closed position,
wherein the lateral mold parts (90, 92, 94, 96) and the upper mold part (122) in the closed position define surfaces of the pressed article (10),
wherein the lateral punch parts (100, 102, 104, 106) are displaceable along the guide recesses (110, 112, 114, 116) in the lateral mold parts (90, 92, 94, 96) to compress the powder,
wherein a direction of movement of the punch parts (100, 102, 104, 106) is oriented parallel to a plane that is oriented perpendicularly to a feed direction of the upper mold part (122), and
wherein the cavity (86) can be filled with the hard-metal powder via the upper side (192) with the aid of gravity.

11. The device as claimed in claim 10, further comprising a lower mold part (120) defining a portion of a lower side of the cavity (86), wherein at least one lateral mold part (90, 92, 94, 96) further defines a portion of a lower side (190) of the cavity (86), and wherein the lateral mold parts (90, 92, 94, 96), the upper mold part (122) and the lower mold part (120) are fixable in the closed position, preferably by a holding unit (150) that fixes the lateral mold parts (90, 92, 94, 96), the upper mold part (122) and the lower mold part (120) in the closed position to form a circumferential portion (32) of the pressed article (10).

12. The device as claimed in claim 10 or 11, wherein the upper mold part (122) is coupled to a vertical slider (126) configured for forming a recess (18) in the pressed article (10), in particular a recess (18) projecting vertically through the pressed article (10), wherein the vertical slider (126) is movable parallel to the upper mold part (122), and wherein in particular also the lower mold part (120) is coupled to a corresponding vertical slider (124).

13. The method as claimed in any one of claims 2 or 3 to 8, when dependent on claim 2, wherein also the lower mold part (120) is moved parallel to the second plane.

14. The method as claimed in any one of claims 1 to 8, wherein the upper mold part (122) is coupled to a vertical slider (126) which forms a recess (18) in the pressed article (10), in particular a recess (18) projecting vertically through the pressed article (10), wherein the vertical slider (126) is moved parallel to the upper mold part (122), and wherein in particular also the lower mold part (120) is coupled to a corresponding vertical slider (124).

15. The method as claimed in any one of claims 1 to 8, wherein the lateral mold parts (90, 92, 94, 96) form a transition (42) between a circumferential portion (32) and at least one upper or lower base area (28, 30) of the pressed article (10), wherein the transition (42) comprises in particular a radius or a chamfer.

## Revendications

1. Procédé pour la fabrication proche d'un contour final de pièces pressées en métal dur, en particulier pour la fabrication d'ébauches frittées pour outils de coupe (66), comprenant les étapes suivantes :
- fourniture d'une matrice en plusieurs parties (82) qui est reçue sur un banc (84) et qui comprend une pluralité de parties de moulage latérales (90, 92, 94, 96) qui définissent des surfaces latérales d'une cavité (86) pour une pièce pressée (10),
dans lequel au moins une partie de moulage latérale (90, 92, 94, 96) définit en outre une section d'un côté supérieur (192) de la cavité (86),
- alimentation des parties de moulage latérales (90, 92, 94, 96), comprenant un mouvement des parties de moulage latérales (90, 92, 94, 96) parallèlement à un premier plan qui est un plan horizontal,
- alimentation d'au moins deux parties de poinçonnage latérales (100, 102, 104, 106), comprenant un mouvement des parties de poinçonnage (100, 102, 104, 106) parallèlement au premier plan qui est un plan horizontal,
dans lequel au moins deux parties de moulage latérales (90, 92, 94, 96) sont pourvues d'un évidement de guidage (110, 112, 114, 116) pour une partie de poinçonnage latérale (100, 102, 104, 106) qui peut être déplacée le long de l'évidement de guidage (110, 112, 114, 116),
- alimentation d'une unité de remplissage (152) par l'intermédiaire d'une ouverture de la cavité (86) et remplissage de la cavité (86) avec une poudre de métal dur,
- alimentation d'au moins une partie supérieure de moulage (122) qui définit une section du côté supérieur (192) de la cavité (86), comprenant un mouvement de la partie supérieure de moulage (122) parallèlement à un second plan qui est un plan vertical,
- maintien des parties de moulage latérales (90, 92, 94, 96) et de la partie supérieure de moulage (122),
- serrage de la poudre avec les au moins deux parties de poinçonnage latérales (100, 102, 104, 106), et
- ouverture des parties de moulage latérales (90, 92, 94, 96), de la partie supérieure de moulage (122) et des parties de poinçonnage (100, 102, 104, 106) pour le démoulage de la pièce pressée (10),
dans lequel la cavité (86) est remplie de la poudre de métal dur par l'intermédiaire du côté supérieur (192) à l'aide de la force de gravité.

2. Procédé selon la revendication 1, présentant en outre :
- la fourniture d'au moins une partie de moulage latérale (90, 92, 94, 96) qui définit en outre une section d'un côté inférieur (190) de la cavité (86),
- l'alimentation d'au moins une partie inférieure de moulage (120) qui définit une section d'un côté inférieur (190) de la cavité (86), et
- le maintien de la partie inférieure de moulage (120) conjointement avec le maintien de la partie de moulage latérale (90, 92, 94, 96) et de la partie supérieure de moulage (122).

3. Procédé selon la revendication 1 ou 2, dans lequel les parties de moulage latérales (90, 92, 94, 96), la partie supérieure de moulage (122) et en particulier également la partie inférieure de moulage (120) sont fixées pendant le serrage, et dans lequel les parties de poinçonnage latérales (100, 102, 104, 106) sont déplacées pour le serrage de la poudre.

4. Procédé selon l'une des revendications précédentes, dans lequel le serrage comprend un serrage latéral par les parties de poinçonnage (100, 102, 104, 106), dans lequel une direction de mouvement respective des parties de poinçonnage (100, 102, 104, 106) est orientée parallèlement à un plan qui est orienté obliquement, en particulier perpendiculairement, par rapport à une direction d'alimentation de la partie supérieure de moulage (122), et/ou dans lequel le serrage de la poudre est effectué sensiblement, de préférence exclusivement, par les parties de poinçonnage latérales (100, 102, 104, 106).

5. Procédé selon l'une des revendications précédentes, dans lequel l'étape d'alimentation des parties de moulage latérales (90, 92, 94, 96) comprend une alimentation de trois parties de moulage latérales (90, 92, 94, 96) ou plus qui peuvent se rapprocher et s'éloigner les unes des autres pour ouvrir ou fermer la cavité (86), dans lequel de préférence les parties de moulage latérales (90, 92, 94, 96) définissent conjointement une limite horizontale pour la pièce pressée (10).

6. Procédé selon l'une des revendications précédentes, dans lequel la cavité (86) et une forme résultante de la pièce pressée (10) sont entièrement définies par des parties matricielles mobiles (90, 92, 94, 96, 120, 122, 124, 126) et des parties de poinçonnage (100, 102, 104, 106), et/ou dans lequel au moins une surface de base supérieure ou inférieure (28, 30), de préférence les deux surfaces de base (28, 30), de la pièce pressée (10) sont générées sans poinçonnage dans la cavité (86), et/ou dans lequel une partie de poinçonnage (100, 102, 104, 106) est associée à chaque partie de moulage latérale (90, 92, 94, 96), laquelle partie de poinçonnage est disposée dans l'évidement de guidage (110, 112, 114, 116), et dans lequel une direction de mouvement de la partie de poinçonnage (100, 102, 104, 106) est parallèle à la direction de mouvement de la partie de moulage latérale (90, 92, 94, 96).

7. Procédé selon l'une des revendications précédentes, dans lequel au moins deux parties de poinçonnage (100, 102, 104, 106), en particulier deux paires de parties de poinçonnage (100, 102, 104, 106), sont décalées verticalement l'une par rapport à l'autre, et/ou dans lequel les parties de poinçonnage (100, 102, 104, 106) forment des sections de la forme de la pièce pressée (10) qui ne peuvent pas être démoulées verticalement.

8. Procédé selon l'une des revendications précédentes, dans lequel, pour la formation d'une pièce pressée (10) pour une plaquette réversible (66) de forme rhombique, quatre parties de moulage latérales (90, 92, 94, 96) sont prévues, lesquelles définissent, au moins dans certaines sections, quatre côtés de la pièce pressée (10) et sont accouplées à quatre parties de poinçonnage latérales (100, 102, 104, 106) qui définissent quatre faces d'attaque (36) dans quatre côtés circonférentiels de la pièce pressée (10), dans lequel une partie supérieure de moulage (122) est prévue pour former une surface de base supérieure (28) et une partie inférieure de moulage (120) est prévue pour former une surface de base inférieure (30), lesquelles sont accouplées à un coulisseau vertical supérieur (126) et à un coulisseau vertical inférieur (124) qui sont en contact l'un avec l'autre, dans lequel le coulisseau vertical supérieur (126) et le coulisseau vertical inférieur (124) forment conjointement une ouverture de passage (18) sur la pièce pressée (10).

9. Procédé pour la fabrication d'outils de coupe en métal dur, en particulier d'inserts de coupe, comprenant :
- la fabrication d'une pièce pressée (10) selon l'une des revendications 1 à 8,
- la manipulation de pièces avec peu de réusinage ou pas de réusinage, en particulier le transfert d'une installation de pressage à une installation de frittage, et
- le frittage des pièces pressées (10).

10. Dispositif (80) pour la fabrication proche d'un contour final de pièces pressées en métal dur (10), en particulier pour la fabrication d'ébauches frittées pour outils de coupe (66), comportant
- un banc (84),
- une matrice en plusieurs parties (82) reçue sur le banc (84) pour la formation d'une cavité (86) pour une pièce pressée (10), comprenant une pluralité de parties de moulage latérales (90, 92, 94, 96) qui définissent des surfaces latérales de la cavité (86), dans lequel au moins une partie de moulage latérale (90, 92, 94, 96) définit en outre une section d'un côté supérieur (192) de la cavité (86), dans lequel les parties de moulage latérales (90, 92, 94, 96) sont mobiles parallèlement à un premier plan afin d'alimenter les parties de moulage latérales (90, 92, 94, 96), dans lequel le premier plan est un plan horizontal,
- une partie supérieure de moulage (122) qui définit une section du côté supérieur (192) de la cavité (86), dans lequel la partie supérieure de moulage (122) est mobile parallèlement à un second plan afin d'alimenter la partie supérieure de moulage (122), dans lequel le second plan est un plan vertical,
- une unité de poinçonnage (98) comportant au moins deux parties de poinçonnage latérales (100, 102, 104, 106), dans lequel au moins deux parties de moulage latérales (90, 92, 94, 96) sont pourvues d'un évidement de guidage (110, 112, 114, 116) pour respectivement une partie de poinçonnage latérale (100, 102, 104, 106), dans lequel les parties de poinçonnage latérales (100, 102, 104, 106) sont mobiles parallèlement au premier plan afin d'alimenter les parties de poinçonnage latérales (100, 102, 104, 106), dans lequel le premier plan est un plan horizontal, et
- une unité de remplissage (152) comportant un sabot de remplissage (154) qui peut être alimenté par une ouverture de la cavité (86) afin de remplir la cavité (86) avec une poudre de métal dur, dans lequel les parties de moulage latérales (90, 92, 94, 96) et la partie supérieure de moulage (122) peuvent être déplacées entre une position ouverte et une position de fermeture, dans lequel les parties de moulage latérales (90, 92, 94, 96) et la partie supérieure de moulage (122) définissent des surfaces de la pièce pressée (10) dans la position de fermeture,
dans lequel les parties de poinçonnage latérales (100, 102, 104, 106) peuvent être déplacées le long des évidements de guidage (110, 112, 114, 116) dans les parties de moulage latérales (90, 92, 94, 96) afin de serrer la poudre,
dans lequel une direction de mouvement des parties de poinçonnage (100, 102, 104, 106) est orientée parallèlement à un plan qui est orienté perpendiculairement à une direction d'alimentation de la partie supérieure de moulage (122), et
dans lequel la cavité (86) peut être remplie de la poudre de métal dur par l'intermédiaire du côté supérieur (192) à l'aide de la force de gravité.

11. Dispositif selon la revendication 10, présentant en outre une partie inférieure de moulage (120) qui définit une section d'un côté inférieur de la cavité (86), dans lequel au moins une partie de moulage latérale (90, 92, 94, 96) définit en outre une section d'un côté inférieur (190) de la cavité (86), et dans lequel les parties de moulage latérales (90, 92, 94, 96), la partie supérieure de moulage (122) et la partie inférieure de moulage (120) peuvent être fixées dans la position de fermeture, de préférence par une unité de maintien (150) qui fixe les parties de moulage latérales (90, 92, 94, 96), la partie supérieure de moulage (122) et la partie inférieure de moulage (120) dans la position fermée afin de former une zone circonférentielle (32) de la pièce pressée (10).

12. Dispositif selon la revendication 10 ou 11, dans lequel la partie supérieure de moulage (122) est accouplée à un coulisseau vertical (126) qui est formé pour mouler un évidement (18) dans la pièce pressée (10), en particulier un évidement (18) traversant verticalement la pièce pressée (10), dans lequel le coulisseau vertical (126) est mobile parallèlement à la partie supérieure de moulage (122), et dans lequel en particulier la partie inférieure de moulage (120) est également accouplée à un coulisseau vertical (124) correspondant.

13. Procédé selon l'une des revendications 2 ou 3 à 8, en référence à la revendication 2, dans lequel la partie inférieure de moulage (120) est également déplacée parallèlement au second plan.

14. Procédé selon l'une des revendications 1 à 8, dans lequel la partie supérieure de moulage (122) est accouplée à un coulisseau vertical (126) qui forme un évidement (18) dans la pièce pressée (10), en particulier un évidement (18) traversant verticalement la pièce pressée (10), dans lequel le coulisseau vertical (126) est déplacé parallèlement à la partie supérieure de moulage (122), et dans lequel en particulier la partie inférieure de moulage (120) est également accouplée à un coulisseau vertical (124) correspondant.

15. Procédé selon l'une des revendications 1 à 8, dans lequel les pièces de moulage latérales (90, 92, 94, 96) forment une transition (42) entre une zone circonférentielle (32) et au moins une surface de base supérieure ou inférieure (28, 30) de la pièce pressée (10), dans lequel la transition (42) comprend en particulier un rayon ou un chanfrein.
